# EUROPÄISCHE PATENTSCHRIFT

(11) **EP 3 960 600 B1**
(45) Veröffentlichungstag und Bekanntmachung des Hinweises auf die Patenterteilung: **19.03.2025**
(21) Anmeldenummer: 20192580.7
(22) Anmeldetag: 25.08.2020
(51) Int. Cl.: B62J 7/06, B62K 3/00, B62K 15/00

(54) **TRANSPORTVORRICHTUNG**
TRANSPORT DEVICE
DISPOSITIF DE TRANSPORT

(43) Veröffentlichungstag der Anmeldung: 02.03.2022
(73) Patentinhaber: lenzio SAS, 01300 Virignin (FR)
(72) Erfinder: Lohrentz, Gerhard, 01300 Virignin (FR)
(74) Vertreter: Louis Pöhlau Lohrentz

(56) Entgegenhaltungen:
- DE-A1- 10 204 478
- DE-U1- 29 715 152
- DE-U1- 9 213 474

## Beschreibung

Die Erfindung betrifft eine Transportvorrichtung zum Transport von Personen und/oder Gepäck nach den Merkmalen des Oberbegriffs des Anspruchs 1, und ein Verfahren zum Umbau einer Transportvorrichtung zum Transport von Personen und/oder Gepäck von einem Tretroller zu einer Handkarren oder umgekehrt nach den Merkmalen des Oberbegriffs des Anspruchs 13.

Transportvorrichtungen für Personen im Sinne eines Tretrollers sind aus der Praxis in vielen Varianten bekannt, beispielsweise mit oder ohne Elektroantrieb, mit zwei oder drei Rädern, wobei die Tretroller darauf ausgelegt sind kurze Strecken möglichst schnell zu überwinden. Auch faltbarer Tretroller sind bereits bekannt, um den Transport im Auto oder der Bahn zu ermöglichen. Lasten können mit Tretrollern aber nur bedingt transportiert werden, da beispielsweise keine Halterung oder breite Lagerfläche vorgesehen ist.

Transportvorrichtungen für Gepäck oder Lasten im Sinne eines Handkarrens sind auch mit oder ohne Elektroantrieb oder spezieller Gestaltung der Räder zum Überwinden von Treppen in einer Vielzahl von Ausführungen bekannt. Diese Handkarren können aber nicht zum Transport von Personen verwendet werden. Aus der DE 29715152 U1 ist ein Roller oder Tretroller bekannt bestehend aus einem Rahmen, an dem ein Hinterrad, ein über einen Lenker lenkbares Vorderrad sowie ein Fußbrett gehaltert sind. Rahmen und Fußbrett sind jeweils quer zur Längsrichtung zweigeteilt und um ein Scharnier schwenkbar ausgebildet. Das zweigeteilte Fußbrett ist symmetrisch zu der durch das Scharnier verlaufenden Trennungsebene ausgebildet. Auf diese Weise entsteht, nachdem der hintere Teil des Rollers um das Scharnier nach vorne geklappt wurde, eine Gepäckkarre, die über den Lenker nach Art einer Sackkarre zum Befördern von Einkäufen oder Gepäckstücken verwendet werden kann.

Der vorliegenden Erfindung liegt die Aufgabe zugrunde, eine einfach zu handhabende und einfach herzustellende Transportvorrichtung mit erweiterten Funktionen bereitzustellen.

Die Aufgabe wird erfindungsgemäß durch eine Transportvorrichtung zum Transport von Personen und/oder Gepäck nach den Merkmalen des Anspruchs 1 gelöst.

Bei der erfindungsgemäßen Lösung handelt es sich um eine Transportvorrichtung zum Transport von Personen und/oder Gepäck, wobei die Transportvorrichtung ein Transportbrett, eine Lenkstange, ein vorderes Radelement und ein hinteres Radelement aufweist, und wobei das vordere Radelement mindestens ein vorderes Rad aufweist und das hintere Radelement mindestens ein hinteres Rad aufweist. Wesentlich dabei ist, dass das Transportbrett, die Lenkstange, das vordere Radelement und das hintere Radelement jeweils als separate Baugruppen ausgebildet sind, und dass das Transportbrett und/oder die Lenkstange und/oder das vordere Radelement und/oder das hintere Radelement eine oder mehrere Verbindungsstelle/n zur Verbindung der Baugruppen untereinander aufweisen, und dass die Transportvorrichtung durch die separaten Baugruppen von einem Tretroller zu einem Handkarren umbaubar ist, indem die Verbindungsstellen derart ausgebildet sind, dass
- in einer ersten Gruppierung die Baugruppen durch die Verbindungsstellen zur Ausbildung des Tretrollers angeordnet sind, und
- in einer zweiten Gruppierung die Baugruppen durch die Verbindungsstellen zur Ausbildung des Handkarrens angeordnet sind, und dass in der ersten Gruppierung das vordere Radelement, das Transportbrett und das hintere Radelement hintereinander, vorzugsweise in einer Linie oder einer Ebene hintereinander angeordnet sind, und dass in der zweiten Gruppierung das vordere Radelement und das hintere Radelement um 90° gedreht zur ersten Gruppierung am Transportbrett angeordnet sind, vorzugsweise an derselben Seite des Transportbretts angeordnet sind.

Bei der erfindungsgemäßen Lösung handelt es sich weiter um ein Verfahren zum Umbau einer Transportvorrichtung zum Transport von Personen und/oder Gepäck von einem Tretroller zu einer Handkarre oder umgekehrt, wobei die Transportvorrichtung eine Transportbrett-Baugruppe, eine Lenkstangen-Baugruppe, eine vordere Radelement-Baugruppe mit mindestens einem vorderen Rad und eine hintere Radelement-Baugruppe mit mindestens einem hinteren Rad aufweist, und wobei die Baugruppen in einer ersten Gruppierung die Baugruppen zur Ausbildung des Tretrollers angeordnet sind, indem das mindestens eine vordere Rad und das mindestens eine hintere Rad hintereinander angeordnet sind, vorzugsweise hintereinander in einer Linie, und in einer zweiten Gruppierung die Baugruppen zur Ausbildung des Handkarrens angeordnet sind, indem das mindestens eine vordere Rad und das mindestens eine hintere Rad parallel zueinander angeordnet sind. Wesentlich dabei ist, dass der Umbau von der einen Gruppierung zur anderen Gruppierung folgende Schritte umfasst:
- Lösen des hinteren und vorderen Radelements vom Transportbrett,
- Verbinden des vorderen und hinteren Radelements an ersten Verbindungsstellen des Transportbretts zur Ausbildung des Tretrollers, oder an zweiten

Verbindungsstellen des Transportbretts zur Ausbildung des Handkarrens, wobei die ersten und/oder zweiten Verbindungsstellen am Transportbrett und/oder am vorderen Radelement und/oder am hinteren Radelement ausgebildet sind.

Der Vorteil der Transportvorrichtung liegt darin, dass der Umbau von der ersten Gruppierung in die zweite Gruppierung sehr einfach und werkzeuglos durch manuelle Handgriffe erfolgen kann. Die Transportvorrichtung ist in der ersten Gruppierung der Baugruppen ein Tretroller zum Transport von Personen. Die Transportvorrichtung ist in der zweiten Gruppierung der Baugruppen ein Handkarren zum Transport von Gepäck oder Lasten. Dabei werden in der ersten Gruppierung und in der zweiten Gruppierung jeweils dieselben Baugruppen zur Ausbildung des Tretrollers oder des Handkarren verwendet. Ein weiterer Vorteil besteht darin, dass zur Reparatur einzelne Baugruppen ausgetauscht werden können und somit nicht die ganze Transportvorrichtung erneuert werden muss. Weiter ist es möglich, dass verschiedene Baugruppen verschiedene Designelement aufweisen und diese beliebig miteinander kombiniert werden können.

Es kann vorgesehen sein, dass das vordere Rad und/oder das hintere Rad als Luftrad, Gummirad, gefedert, und/oder ungefedert ausgebildet sind Es kann auch vorgesehen sein, dass das vordere Rad und/oder das hintere Rad kugellagergeführt ausgebildet sind. Der Vorteil einer derartigen Ausbildung ermöglicht ein leises Transportieren von Menschen und/oder Waren. Bei entsprechenden Tretrollern oder Trolleys aus dem Stand der Technik werden oftmals einfache Räder aus Kunststoff verwendet, so dass beim Abrollen der Räder eine laute Geräuschkulisse entsteht. Die Verwendung kugelgelagerter Räder bzw. von Luftreifen oder Gummirädern und/oder entsprechend gefederter Räder führt beim Rollen zu einer sehr geringeren Geräuschentwicklung und im Ergebnis zu einer verminderten Lärmbelastung der Umgebung. Weiter wird durch die Verwendung derartiger Räder die Transportfläche mit der Ware oder dem Menschen durch die Räder von der Straßenoberfläche entkoppelt und bewirkt dadurch ein gutes und stabiles Fahrgefühl und eine geringere Geräuschentwicklung.

Es kann vorgesehen sein, dass das Transportbrett, die Lenkstange, das vordere Radelement und/oder das hintere Radelement aus Aluminium, einer Aluminiumlegierung, Kunststoff, Faserverbund und/oder Carbon ausgebildet sind.

Vorteilhafterweise kann vorgesehen sein, dass an der Lenkstange und/oder am Transportbrett eine Aufnahme zur Halterung eines Transportbehälts, vorzugsweise eines Koffers oder einer Tasche, ausgebildet ist.

Es kann vorgesehen sein, dass am Transportbrett in einem vorderen Bereich eine oder zwei Verbindungsstellen ausgebildet sind, vorzugsweise eine erste vordere Transportbrett-Verbindungsstelle oder eine erste vordere Transportbrett-Verbindungsstelle und eine zweite vordere Transportbrett-Verbindungsstelle, und/oder
dass am Transportbrett in einem hinteren Bereich eine oder zwei Verbindungsstellen ausgebildet sind, vorzugsweise eine erste hintere Transportbrett-Verbindungsstelle oder eine erste hintere Transportbrett-Verbindungsstelle und eine zweite hintere Transportbrett-Verbindungsstelle, und/oder
dass am vorderen Radelement eine oder zwei Verbindungsstellen ausgebildet sind, vorzugsweise eine erste vordere Radelement-Verbindungsstelle oder erste vordere Radelement-Verbindungsstelle und eine zweite vordere Radelement-Verbindungsstelle, und/oder
dass am hinteren Radelement eine oder zwei Verbindungsstellen ausgebildet sind, vorzugsweise eine erste hintere Radelement-Verbindungsstelle oder erste hintere Radelement-Verbindungsstelle und eine zweite hintere Radelement-Verbindungsstelle.

Beispielsweise kann vorgesehen sein, dass die jeweils erste und zweite Verbindungsstelle einer Baugruppe um 90° gedreht zueinander ausgebildet, vorzugsweise
die erste vordere Transportbrett-Verbindungsstelle und die zweite vordere Transportbrett-Verbindungsstelle, und/oder
die erste hintere Transportbrett-Verbindungsstelle und die zweite hintere Transportbrett-Verbindungsstelle, und/oder
die erste vordere-Radelement-Verbindungsstelle und die zweite vordere-Radelement-Verbindungsstelle, und/oder
die erste hintere-Radelement-Verbindungsstelle und die zweite hintere-Radelement-Verbindungsstelle.

Es kann vorgesehen sein, dass die erste vordere Transportbrett-Verbindungsstelle mit der ersten vorderen Radelement-Verbindungsstelle zur ersten Gruppierung der Baugruppen als Tretroller zusammenwirkt, und
dass die zweite vordere Transportbrett-Verbindungsstelle mit der ersten vorderen Radelement-Verbindungsstelle zur zweiten Gruppierung der Baugruppen als Handkarren zusammenwirkt, oder
dass die erste vordere Transportbrett-Verbindungsstelle mit der zweiten vorderen Radelement-Verbindungsstelle zur zweiten Gruppierung der Baugruppen als Handkarren zusammenwirkt.

Es kann vorgesehen sein, dass die erste hintere Transportbrett-Verbindungsstelle mit der ersten hinteren Radelement-Verbindungsstelle zur ersten Gruppierung der Baugruppen als Tretroller zusammenwirkt, und
dass die zweite hintere Transportbrett-Verbindungsstelle mit der ersten hinteren Radelement-Verbindungsstelle zur zweiten Gruppierung der Baugruppen als Handkarren zusammenwirkt, oder
dass die erste hintere Transportbrett-Verbindungsstelle mit der zweiten hinteren Radelement-Verbindungsstelle zur zweiten Gruppierung der Baugruppen als Handkarren zusammenwirkt.

Erfindungsgemäß ist in der ersten Gruppierung das vordere Radelement, das Transportbrett und das hintere Radelement hintereinander, vorzugsweise in einer Linie oder einer Ebene hintereinander angeordnet sind, und dass in der zweiten Gruppierung das vordere Radelement und das hintere Radelement um 90° gedreht zur ersten Gruppierung am Transportbrett angeordnet sind, vorzugsweise an derselben Seite des Transportbretts angeordnet sind.

Es kann vorgesehen sein, dass in der ersten Gruppierung zur Ausbildung des Tretrollers das mindestens eine vordere Rad und das mindestens eine hintere Rad dieselbe Laufrichtung aufweisen und mit Abstand hintereinander angeordnet sind, vorzugsweise hintereinander in einer Linie oder einer Ebene angeordnet und durch das Transportbrett beabstandet sind, und
dass in der zweiten Gruppierung zur Ausbildung des Handkarrens das mindestens eine vordere Rad und das mindestens eine hintere Rad parallel zueinander angeordnet, vorzugsweise parallel in zwei getrennten Ebenen, und in ihrer Laufrichtung quer zu der Längsachse des Transportbretts angeordnet sind.

Es kann vorgesehen sein, dass in der ersten Gruppierung die Lenkstange am vorderen Radelement angeordnet ist, um den Tretroller zu steuern. In der zweiten Gruppierung kann vorgesehen sein, dass die Lenkstange am Transportbrett angeordnet ist, um den Handkarren zu ziehen.

Es kann vorgesehen sein, dass die Baugruppe des vorderen Radelements einen vorderen Verbindungsbereich, eine vordere Lenkachse und eine vordere Radaufhängung mit dem vorderen Rad aufweist.

Es kann vorgesehen sein, dass in der ersten Gruppierung die vordere Lenkachse drehbar, vorzugsweise drehbar zum Verbindungsbereich oder Transportbrett und starr zur vorderen Radaufhängung ausgebildet ist, um den Tretroller zu steuern, und dass in der zweiten Gruppierung die vordere Lenkachse gesperrt ausgebildet ist, um eine Drehung der Radaufhängung zu verhindern.

Vorzugsweise kann vorgesehen sein, dass die Lenkachse und die Lenkstange koaxial ausgebildet sind. Insbesondere kann die Lenkstange eine mechanische Sicherung aufweisen, insbesondere eine Rastsicherung oder eine Schraubsicherung, um ein versehentliches Lösen der Lenkstange von dem Transportbrett oder der vorderen Radaufhängung zu verhindern.

Es kann vorgesehen sein, dass die vordere Lenkachse durch eine Achse und einen Zapfen oder eine Nut am Verbindungsbereich und einer Nut oder einen Zapfen an der Radaufhängung ausgebildet ist, wobei der Zapfen und mindestens eine der Nutwangen der Nut eine Öffnung für die Achse aufweist, und
- dass in der ersten Gruppierung zur beweglichen Ausbildung der Lenkachse die Achse als Zylinder ausgebildet ist, welcher in die Öffnung eingreift, und dass in der zweiten Gruppierung die Achse als ein Zylinder mit einer Nabe, oder einer Nut oder einer Verzahnung oder eine Zahnkupplung ausgebildet ist, welche mit der Öffnung zur Sperrung der Lenkachse zusammenwirkt, oder
- dass die Achse als ein Zylinder mit einer Nabe, oder einer Nut oder einer Verzahnung oder eine Zahnkupplung ausgebildet ist und die Öffnung einen ersten Bereich zum Eingreifen der Nabe, oder einer Nut oder einer Verzahnung oder eine Zahnkupplung zum Sperren der beweglichen Ausbildung der Lenkachse, und die Öffnung einen zweiten Bereich zum Eingreifen der Nabe, oder einer Nut oder einer Verzahnung oder eine Zahnkupplung zur Freigabe der beweglichen Ausbildung der Lenkachse aufweist.

In einer Ausgestaltung kann vorgesehen sein, dass an der vorderen Radaufhängung eine Radaufhängungs-Verbindungsstelle zur Aufnahme der Lenkstange ausgebildet ist, vorzugsweise,
dass die Radaufhängungs-Verbindungsstelle an der vorderen Radaufhängung als eine oder mehrere Nuten oder Zapfen oder Schwalbenschwanznuten oder Schwalbenschwanzzapfen ausgebildet ist, und vorzugsweise
dass die Lenkstange bei der Anordnung auf der Radaufhängungs-Verbindungsstelle der vorderen Radaufhängung die Achse der vorderen Lenkachse sichert.

Beispielsweise kann vorgesehen sein, dass der vordere Verbindungsbereich eine oder zwei Verbindungsstellen aufweist, vorzugsweise die erste vordere Radelement-Verbindungsstelle oder die erste vordere Radelement-Verbindungsstelle und die zweite vordere Radelement-Verbindungsstelle, welche mit einer oder zwei Verbindungsstellen des Transportbretts zusammenwirken, vorzugsweise die erste vordere Transportbrett-Verbindungsstelle oder die erste vordere Transportbrett-Verbindungsstelle und die zweite vordere Transportbrett-Verbindungsstelle, wobei vorzugsweise die erste und zweite Verbindungsstelle um 90° zueinander gedreht ausgebildet sind.

Es kann vorgesehen sein, dass die erste vordere Radelement-Verbindungsstelle und die zweite vordere Radelement-Verbindungsstelle oder die erste vordere Transportbrett-Verbindungsstelle und die zweite vordere Transportbrett-Verbindungsstelle derart um 90° gedreht zueinander ausgebildet sind, dass zum Umbau von der ersten Gruppierung zur zweiten Gruppierung das vordere und hintere Radelement um 90° gedreht am Transportbrett angeordnet sind, um den Umbau vom Tretroller zum Handkarren zu ermöglichen.

Es kann vorgesehen sein, dass die Baugruppe des hinteren Radelements einen hinteren Verbindungsbereich und eine hintere Radaufhängung mit dem hinteren Rad aufweist.

Vorzugsweise kann vorgesehen sein, dass die Baugruppe des hinteren Radelements eine hintere Lenkachse aufweist.

Es kann vorgesehen sein, dass in der ersten und in der zweiten Gruppierung die hintere Lenkachse gesperrt ausgebildet ist.

Beispielsweise kann vorgesehen sein, dass die hintere Lenkachse durch einen Zapfen am Verbindungsbereich und einer Nut an der Radaufhängung ausgebildet ist, wobei der Zapfen und mindestens eine der Nutwangen der Nut eine Öffnung für eine Achse aufweist, und dass in der ersten und zweiten Gruppierung die Achse als ein Zylinder mit einer Nabe, oder einer Nut oder einer Verzahnung oder eine Zahnkupplung ausgebildet ist, welche mit der Öffnung zur Sperrung der Lenkachse zusammenwirkt.

In einem Beispiel kann vorgesehen sein, dass der hintere Verbindungsbereich eine oder zwei Verbindungsstellen aufweist, vorzugsweise die erste hintere Radelement-Verbindungsstelle oder die erste hintere Radelement-Verbindungsstelle und die zweite hintere Radelement-Verbindungsstelle, welche mit einer oder zwei Verbindungsstellen des Transportbretts zusammenwirken, vorzugsweise die erste hintere Transportbrett-Verbindungsstelle oder die erste hintere Transportbrett-Verbindungsstelle und die zweite hintere Transportbrett-Verbindungsstelle, wobei vorzugsweise jeweils die erste und zweite Verbindungsstelle um 90° zueinander gedreht ausgebildet sind.

Es kann vorzugsweise vorgesehen sein, dass die erste hintere Radelement-Verbindungsstelle und die zweite hintere Radelement-Verbindungsstelle oder die erste hintere Transportbrett-Verbindungsstelle und die zweite hintere Transportbrett-Verbindungsstelle derart um 90° gedreht zueinander ausgebildet sind, dass zum Umbau von der ersten Gruppierung zur zweiten Gruppierung das vordere und hintere Radelement um 90° gedreht am Transportbrett angeordnet sind, um den Umbau vom Tretroller zum Handkarren zu ermöglichen.

Es kann vorgesehen sein, dass die Baugruppe des Transportbretts einen Transportabschnitt, und
einen vorderen Verbindungsbereich zum Zusammenwirken mit dem vorderen Radelement, und
einen hinteren Verbindungsbereich zum Zusammenwirken mit dem hinteren Radelement, und
einen mittleren Verbindungsbereich zum Zusammenwirken mit der Lenkstange aufweist.

Insbesondere kann vorgesehen sein, dass der vordere und/oder der hintere Verbindungsbereich des Transportbretts eine oder zwei Verbindungsstellen aufweist, vorzugsweise die erste hintere Transportbrett-Verbindungsstelle oder die erste hintere Transportbrett-Verbindungsstelle und die zweite hintere Transportbrett-Verbindungsstelle, welche mit einer der Verbindungsstellen des vorderen und/oder hinteren Radelements, vorzugsweise mit der ersten hinteren Radelement-Verbindungsstelle oder der zweiten hinteren Radelement-Verbindungsstelle oder der ersten vorderen Radelement-Verbindungsstelle oder der zweiten vorderen Radelement-Verbindungsstelle zusammenwirken.

Beispielsweise kann vorgesehen sein, dass die jeweils erste und zweite Verbindungsstelle des Transportbretts, vorzugsweise die erste hintere Transportbrett-Verbindungsstelle und die zweite hintere Transportbrett-Verbindungsstelle oder die erste vordere Transportbrett-Verbindungsstelle und die zweite vordere Transportbrett-Verbindungsstelle, derart um 90° gedreht zueinander ausgebildet sind, dass zum Umbau von der ersten Gruppierung zur zweiten Gruppierung das vordere und hintere Radelement um 90° gedreht am Transportbrett angeordnet sind, um den Umbau vom Tretroller zum Handkarren zu ermöglichen.

Es kann vorgesehen sein, dass das Transportbrett eine mittlere Transportbrett-Verbindungsstelle aufweist, welche mit der ersten oder zweiten Lenkstangen-Verbindungsstelle zur Ausbildung der zweiten Gruppierung zusammenwirkt.

Es kann vorgesehen sein, dass die Baugruppe der Lenkstange ein Rohr, vorzugsweise ein höhenverstellbares Teleskoprohr, eine Griffstange und eine oder zwei Verbindungsstellen aufweist, vorzugweise eine erste Lenkstangen-Verbindungsstelle oder eine erste Lenkstangen-Verbindungsstelle und eine zweite Lenkstangen-Verbindungsstelle.

Es kann vorgesehen sein, dass die erste Lenkstangen-Verbindungsstelle zur Verbindung mit dem vorderen Radelement und dem Trittbrett ausgebildet ist, oder dass die erste Lenkstangen-Verbindungsstelle zur Verbindung mit dem vorderen Radelement und die zweite Lenkstangen-Verbindungsstelle zur Verbindung mit dem Trittbrett ausgebildet ist.

Es kann vorgesehen sein, dass die erst und zweite Lenkstangen-Verbindungsstelle unter einem Winkel von 90° zueinander angeordnet sind.

Es kann vorgesehen sein, dass die erste und/oder zweite Lenkstangen-Verbindungsstelle zur Verbindung mit dem Trittbrett derart ausgebildet sind, dass die Lenkstange in der zweiten Gruppierung unter einem Winkel (nach vorne) in Fahrtrichtung bzw. Laufrichtung geneigt am Trittbrett angeordnet ist

Es kann vorgesehen sein, dass die Verbindungsstelle, vorzugsweise
- die erste und/oder zweite vordere Transportbrett Verbindungsstelle, und/oder
- die erste und/oder zweite hintere Transportbrett Verbindungsstelle, und/oder
- die erste und/oder zweite vordere Radelement Verbindungsstelle, und/oder
- die erste und/oder zweite hintere Radelement Verbindungsstelle, und/oder
- die erste und/oder zweite Lenkstangen-Verbindungsstelle
als eine eingreifende Verbindungsstelle und/oder eine aufnehmende Verbindungsstelle ausgebildet ist, vorzugsweise dass die eingreifende Verbindungstelle als das Gegenstück zur aufnehmenden Verbindungsstelle ausgebildet ist.

Es kann vorgesehen sein, dass die eingreifende Verbindungsstelle einen rahmenförmigen Zapfen mit einer Sprosse aufweist, vorzugsweise die Sprosse über den Rahmen hinaus ausgebildet ist, und
dass die aufnehmende Verbindungsstelle eine erste U-förmige Nut aufweist, vorzugsweise auf der Oberseite oder der Unterseite der Baugruppe, in die der rahmenförmige Zapfen eingreifen kann, und eine zweite Nut aufweist, vorzugsweise auf der Unterseite oder der Oberseite der Baugruppe, in die die Sprosse eingreifen kann, oder
dass die engreifende Verbindungsstelle einen oder mehrere Zapfen oder Schwalbenschwanzzapfen aufweisen ist, und
dass die aufnehmende Verbindungsstelle eine oder mehrere Nuten oder Schwalbenschwanznuten aufweisen, in die die Zapfen oder Schwalbenschwanzzapfen eingreifen.

Es kann vorgesehen sein, dass die eingreifende Verbindungsstelle und die aufnehmende Verbindungsstelle zweier Baugruppen durch eine Kipp- und/oder Schiebbewegung die zwei Baugruppen miteinander verbindet.

Vorzugsweise kann vorgesehen sein, dass zur Arretierung der Baugruppen untereinander ein Sperrzapfen oder eine Sperrwippe oder ein Sperrschieber oder ein Gegenstück zum Sperrzapfen oder einer Sperrwippe oder einem Sperrschieber ausgebildet ist.

Es kann vorgesehen sein, dass auf dem Transportbrett und/oder dem vordere Radelement und/oder dem hinteren Radelement eine lärmisolierende oder geräuschdämpfende Abdeckung und/oder eine lärmisolierende oder geräuschdämpfende Schicht angeordnet ist.

Es kann vorgesehen sein, dass die Transportvorrichtung eine tragbare Transporttasche oder einen tragbaren Transportrucksack oder einen tragbaren Transportsack oder einen tragbaren Koffer umfasst. Vorzugsweise können zum Transport der Transportvorrichtung die Baugruppen der Transportvorrichtung, insbesondere sämtliche Baugruppen der Transportvorrichtung, in der Transporttasche oder dem Transportrucksack oder dem Transportsack oder den Koffer verstaubar, insbesondere angeordnet und/oder anordenbar sein. Insbesondere kann vorgesehen sein, dass die Transporttasche oder der Transportrucksack oder der Transportsack oder der Koffer, insbesondere in der zweiten Gruppierung der Baugruppen als Handkarren, am Handkarren befestigt ist, um einen Handkarren mit Transportbeutel oder Transportkoffer auszubilden. Um die Transportkapazität zu variieren, kann die Transporttasche oder der Transportrucksack oder der Transportsack oder der Koffer in der Höhe verstellbar ausgebildet sein, vorzugsweise durch faltbare Ausziehelemente bzw. Dehnfalten.

Insbesondere kann vorgesehen sein, dass bei der Ausbildung der Handkarre und/oder des Tretrollers die Transporttasche oder der Transportrucksack oder der Transportsack auf dem Transportbrett und/oder dem vorderen und/oder hinteren Radelement angeordnet, insbesondere dort abgestützt ist. Vorzugsweise ist die Transporttasche oder der Transportrucksack oder der Transportsack abnehmbar mit dem Transportbrett und/oder dem vorderen und/oder hinteren Radelement verbindbar. Vorzugsweise ist eine Wand der Transporttasche oder des Transportrucksacks oder der Transportsack oder die Tasche selbst lärmisolierend ausgebildet und/oder mit einer lärmisolierenden Schicht versehen. Um Lärm zu reduzieren kann an dem Transportbrett und/oder an dem vorderen und/oder hinteren Radelement eine Auflage oder Beschichtung aus einem lärmisolierenden oder Geräusch dämpfenden Material angeordnet sein.

Es kann in einer Ausgestaltung vorgesehen sein, dass der Umbau von der ersten Gruppierung zur zweiten Gruppierung weiter folgenden Schritt umfasst:
- Lösen der Lenkstange vom vorderen Radelement, vorzugsweise von einer dritten vorderen Radelement-Verbindungsstelle am vorderen Radelement, und
- Verbinden der Lenkstange am Transportbrett, vorzugsweise an einer mittleren Transportbrett-Verbindungsstelle, vorzugsweise um 90° gedreht, höchst vorzugsweise um 90° gedreht in Zugrichtung, und
- Sperren der Lenkbarkeit des vorderen Radelements.

Es kann vorgesehen sein, dass der Umbau von der zweiten Gruppierung zur ersten Gruppierung weiter folgenden Schritte umfasst:
- Entsperren der Lenkbarkeit des vorderen Radelements,
- Lösen der Lenkstange vom Transportbrett und verbinden der Lenkstange am vorderen Radelement.

Weitere Ausführungen der Erfindung sind in den Figuren dargestellt und nachfolgend beschrieben. Dabei zeigen:
- Fig. 1:: eine schematische Darstellung der erfindungsgemäßen Transportvorrichtung in der ersten Gruppierung als Tretroller;
- Fig. 2:: eine schematische Darstellung der erfindungsgemäßen Transportvorrichtung in der zweiten Gruppierung als Handkarren in Vorderansicht;
- Fig. 3:: Transportvorrichtung aus Fig. 2 in der Rückansicht;
- Fig. 4:: Baugruppe des Transportbretts;
- Fig. 5:: Baugruppe der Lenkstange;
- Fig. 6:: Baugruppe des vorderen Radelements;
- Fig. 7:: Baugruppe des hinteren Radelements;
- Fig. 8:: Explosionsdarstellung der erfindungsgemäßen Transportvorrichtung angeordnet in der ersten Gruppierung als Tretroller;
- Fig. 9:: Explosionsdarstellung der erfindungsgemäßen Transportvorrichtung angeordnet in der zweiten Gruppierung als Handkarren in Vorderansicht;
- Fig. 10:: Explosionsdarstellung der erfindungsgemäßen Transportvorrichtung angeordnet in der zweiten Gruppierung als Handkarren in Rückansicht;
- Fig. 11a:: eingreifende Verbindungsstelle;
- Fig. 11b:: aufnehmende Verbindungsstelle;
- Fig. 12a bis 12c:: Verbinden der Verbindungsstellen aus den Fig. 11a und 11b;
- Fig. 13a bis 13d:: Sichern der Verbindungsstellen aus den Fig. 11a und 11b;
- Fig. 14a bis 14f:: Einstellen der Drehbarkeit der vorderen Lagerachse und Verbindung des vorderen Radelements und der Lenkstange;
- Fig. 15a und 15b:: Verbindung des Transportbretts und der Lenkstange;
- Fig. 16a und 16b:: Transportvorrichtung in der zweiten Gruppierung als Handkarren mit Transportsack.

In den Figuren ist beispielhaft eine mögliche Ausgestaltung der Erfindung gezeigt.

Diese Ausgestaltung dient der Erläuterung einer möglichen Umsetzung der Erfindung und soll nicht eingrenzend verstanden werden.

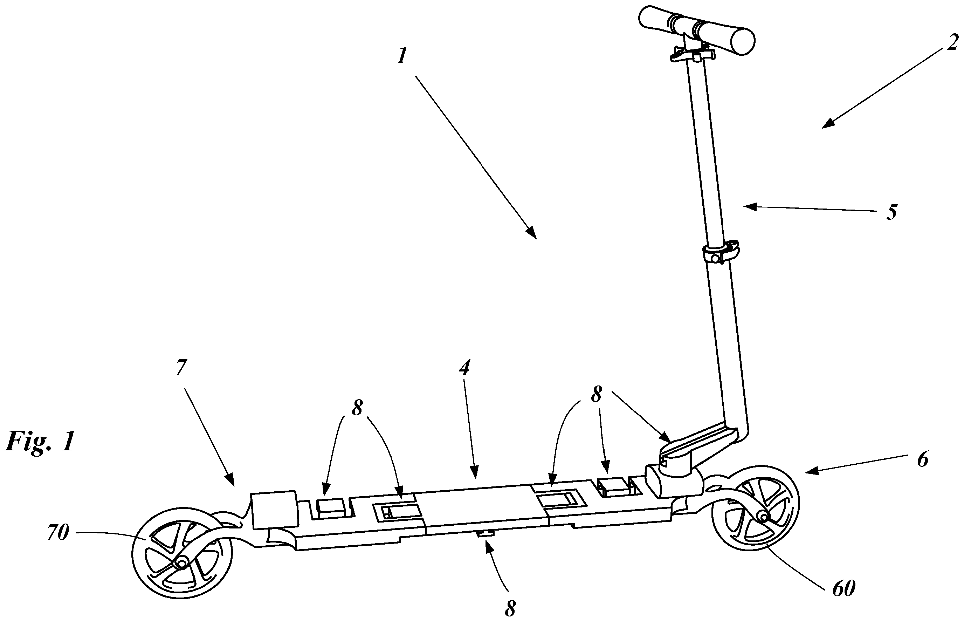

Die Fig. 1, 2 und 3 zeigen eine Transportvorrichtung 1 mit einem Transportbrett 4, einer Lenkstange 5, einem vorderen Radelement 6 und einem hinteren Radelement 7, welche als separate Baugruppen ausgebildet sind. Das vordere Radelement 6 weist ein vorderes Rad 60 auf und das hintere Radelement 7 weist ein hinteres Rad 70 auf. Die Baugruppen in den Fig. 1 bis 3 sind durch Verbindungsstellen 8 in einer ersten Gruppierung und einer zweiten Gruppierung miteinander verbunden.

In der in Fig. 1 gezeigten ersten Gruppierung sind die Baugruppen zur Ausbildung eines Tretrollers 2 angeordnet und über die entsprechenden Verbindungsstellen 8 miteinander verbunden. In der ersten Gruppierung sind das vordere Radelement 6, das Transportbrett 4 und das hintere Radelement 7 in dieser Reihenfolge in einer Linie hintereinander angeordnet. Das vordere Rad 60 und das hintere Rad 70 sind in einer Linie hintereinander angeordnet. Die Lenkstange 5 ist zur Lenkung des Tretrollers 2 an dem vorderen Radelement 6 angeordnet.

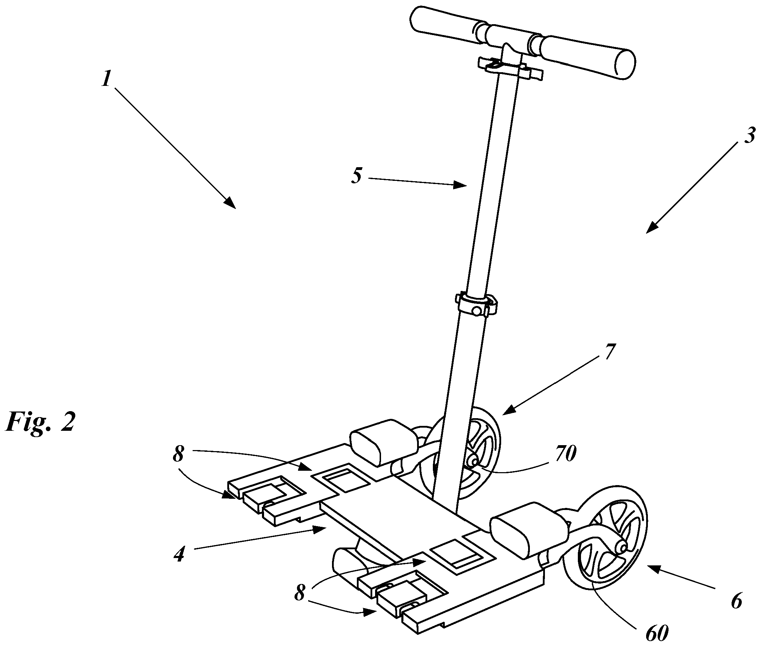

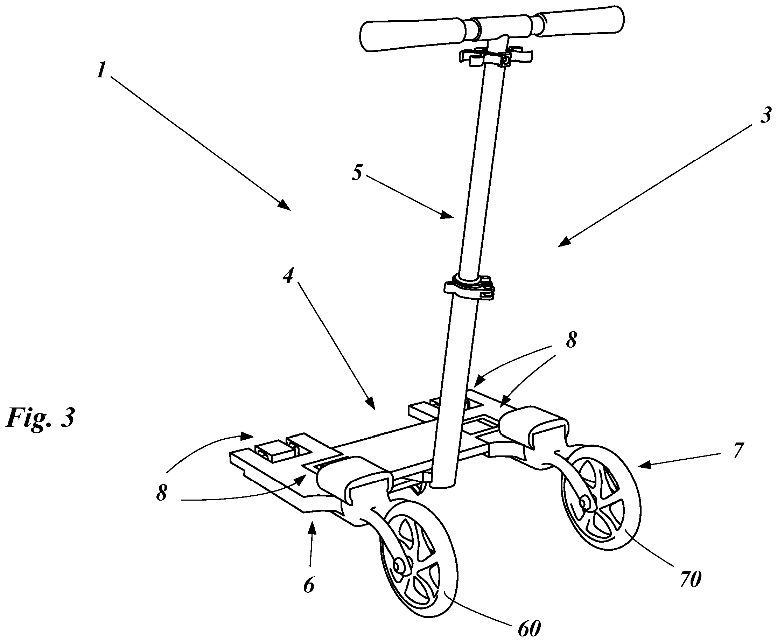

Die Fig. 2 und 3 zeigen die zwei Gruppierungen der Baugruppen zur Ausbildung eines Handkarrens 3. Die Baugruppen Transportbrett 4, Lenkstange 5, vorderes Radelement 6 und hinteres Radelement 7 sind durch die Verbindungsstellen 8 für die zweite Gruppierung derart angeordnet und miteinander verbunden, dass das vordere Rad 60 und das hintere Rad 70 parallel zueinander angeordnet sind. Die Lenkstange 5 ist mittig am Transportbrett 4 angeordnet, wodurch die Handkarre 3 gezogen werden kann.

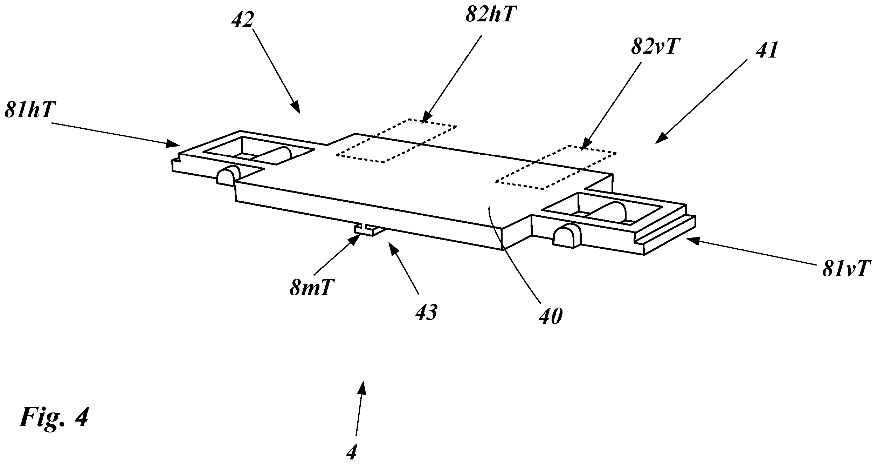

Fig. 4 zeigt die Baugruppe des Transportbretts 4. Das Transportbrett 4 weist einen vorderen Verbindungbereich 41, welcher mit dem vorderen Radelement 6 in der ersten und zweiten Gruppierung zusammenwirkt, einen hinteren Verbindungsbereich 42, welcher mit dem hinteren Radelement 7 in der ersten und zweiten Gruppierung zusammenwirkt und einen mittleren Verbindungsbereich 43 auf, welcher mit der Lenkstange 5 in der zweiten Gruppierung zusammenwirkt auf.

In dem in der Fig. 4 gezeigten Ausführungsbeispiel sind im vorderen Verbindungsbereich 41 und hinteren Verbindungsbereich 42 jeweils eine Verbindungsstelle 8, nämlich eine erste vordere Transportbrett-Verbindungsstelle 81vT am vorderen Verbindungsbereich 41 und eine erste hintere Transportbrett-Verbindungsstelle 81hT am hinteren Verbindungsbereich 42 ausgebildet. Im mittleren Verbindungsbereich 43 ist eine mittlere Transportbrett-Verbindungsstelle 8mT auf der Unterseite des Transportbretts 4 als ein T-förmiger Zapfen ausgebildet. Es sind auch Ausführungen möglich, bei denen die erste vordere Transportbrett-Verbindungsstelle 81vT und eine zweite vordere Transportbrett-Verbindungsstelle 82vT im vorderen Verbindungsbereich 41 und/oder die erste hintere Transportbrett-Verbindungsstelle 81hT und eine zweite hintere Transportbrett-Verbindungsstelle 82hT im hinteren Verbindungsbereich 42 ausgebildet sind, wobei jeweils die erste und zweite Verbindungsstelle um 90° gedreht zueinander angeordnet sind, um das Verbinden der Baugruppen zur ersten und zweiten Gruppierung zu ermöglichen. In Fig. 4 ist sind die zweite vordere Transportbrett-Verbindungsstelle 82vT und die zweite hintere Transportbrett-Verbindungsstelle 82hT sowie deren Position nur schematisch durch die gestrichelten Rechtecke dargestellt.

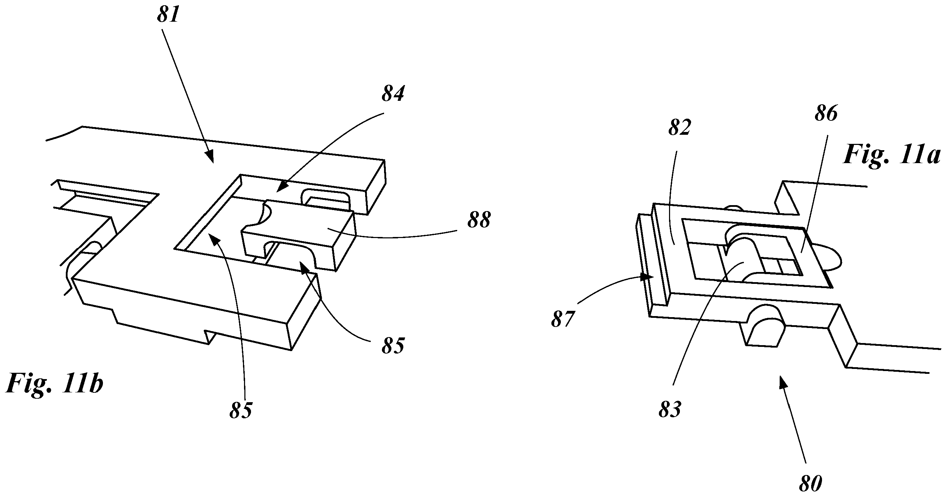

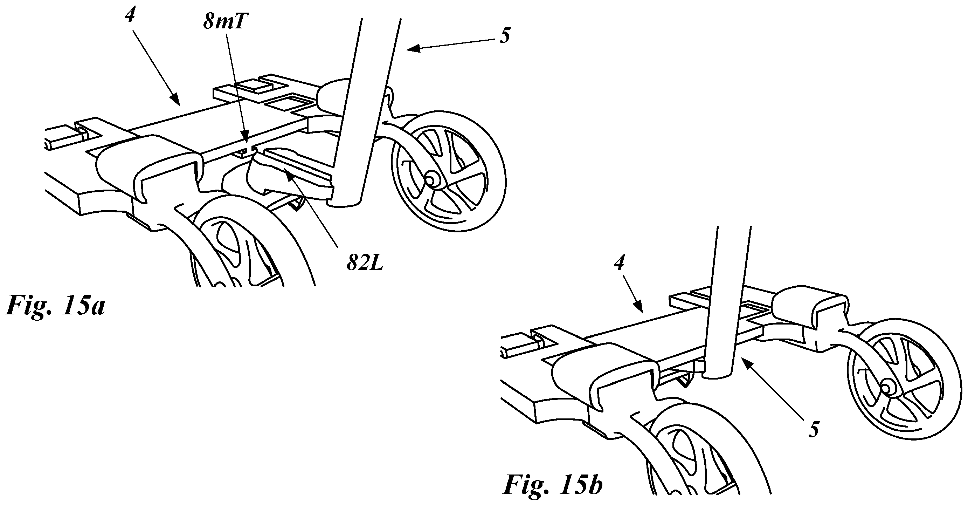

Die Ausgestaltung und Funktion der ersten vorderen Transportbrett-Verbindungsstelle 81vT und der zweiten vorderen Transportbrett-Verbindungsstelle 82vT und der ersten hinteren Transportbrett-Verbindungsstelle 81hT und der zweiten hinteren Transportbrett-Verbindungsstelle 82hTsind in den Fig. 11, 12 und 13 genauer beschrieben. Die Ausgestaltung und Funktion der mittleren Transportbrett-Verbindungsstelle 8mT ist in den Fig. 15 beschrieben.

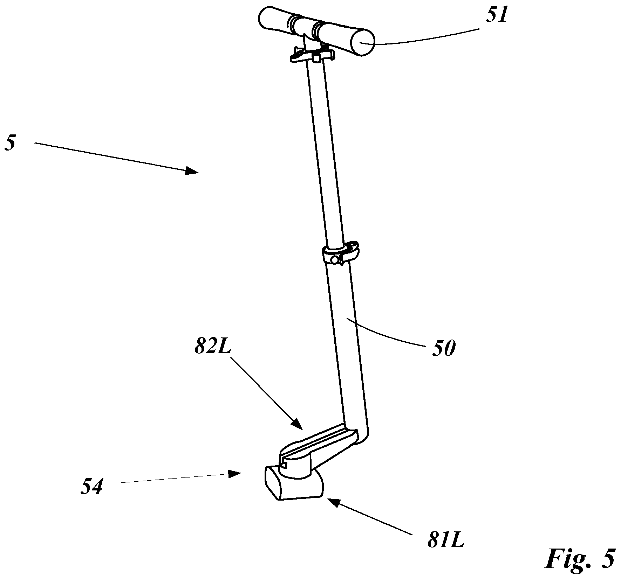

Fig. 5 zeigt die Baugruppe der Lenkstange 5 als Explosionsdarstellung, welche sich aus einem Rohr 50, einer Griffstange 51, den Verbindungstellen 8, d.h. einer ersten Lenkstangen-Verbindungsstelle 81L und einer zweiten Lenkstangen-Verbindungsstelle 82L an der Lenkstange 5 zusammensetzt. Das Rohr 50 ist als ein höhenverstellbares Teleskoprohr ausgebildet, an dessen Oberseite die Griffstange 51 angeordnet ist. An der Unterseite des Rohres 50 ist der Verbindungsabschnitt 54 der Lenkstange 5 ausgebildet, welcher die erste Lenkstangen-Verbindungsstelle 81L und die zweite Lenkstangen-Verbindungsstelle 82L aufweist.

Die erste Lenkstangen-Verbindungsstelle 81L an der Lenkstange 5 ist, wie beispielsweise in den Fig. 15 dargestellt, als eine Nut mit Vorsprüngen an den Nutwänden ausgebildet, welche in der ersten Gruppierung mit entsprechenden Nuten am vorderen Radelement 6 zusammenwirken. Die zweite Lenkstangen-Verbindungsstelle 82L an der Lenkstange 5 ist als eine nach oben offene T-Nut ausgebildet, welche mit der mittleren Transportbrett-Verbindungsstelle 8mT am Transportbrett 4 in der zweiten Gruppierung zusammenwirkt.

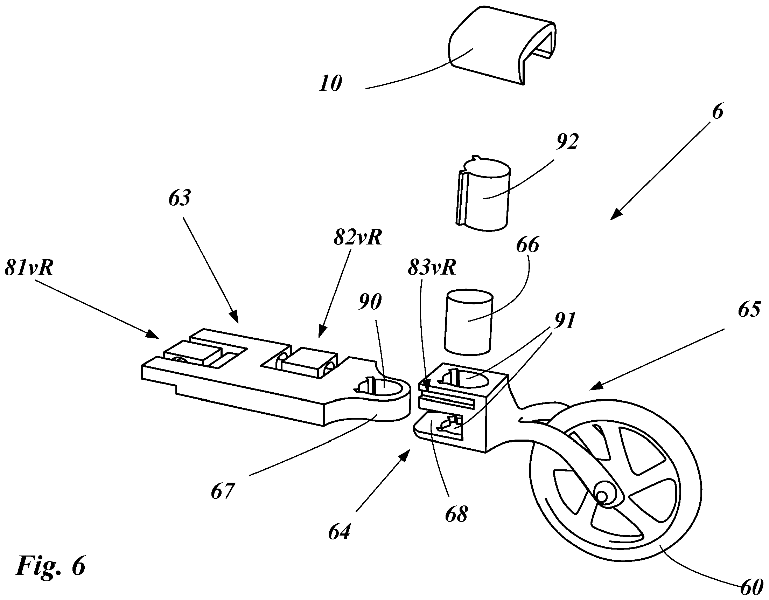

Fig. 6 zeigt die Baugruppe des vorderen Radelements 6 als Explosionsdarstellung, welche einen vorderen Verbindungsbereich 63 des vorderen Radelements 6, eine vordere Lenkachse 64 und eine vordere Radaufhängung 65 aufweist.

Der vordere Verbindungsbereich 63 des vorderen Radelements 6 weist in dem Ausführungsbeispiel der Fig. 6 die Verbindungsstellen 8 auf, d.h. eine erste vordere Radelement-Verbindungsstelle 81vR am vorderen Radelement 6, welche mit dem vorderen Verbindungsbereich 41 des Transportbretts 4 zur Ausbildung der ersten Gruppierung zusammenwirkt, und eine zweite vordere Radelement-Verbindungsstelle 82vR am vorderen Radelement 6 auf, welche mit dem vorderen Verbindungsbereich 41 des Transportbretts 4 zur Ausbildung der zweiten Gruppierung zusammenwirkt. Die beiden Verbindungsstellen 81vR und 82vR sind um 90° gedreht zueinander ausgebildet, um die Anordnung der Baugruppen in der ersten und zweiten Gruppierung zu ermöglichen.

Die vordere Lenkachse 64 setzt sich zusammen aus einer Achse 66, einer vorderen Nut 68, welche an der vorderen Radaufhängung 65 ausgebildet ist, und einem vorderen Zapfen 67, welcher am vorderen Verbindungsbereich 63 des vorderen Radelements 6 ausgebildet ist. Die Achse 66 verbindet den vorderen Verbindungsbereich 63 des vorderen Radelements 6 mit der vorderen Radaufhängung 65 drehbar miteinander, indem die Achse 66 in einer Bohrung 91 der vorderen Nutbacken und einer Bohrung 90 im vorderen Zapfen 67 angeordnet ist. Die Bohrung 91 für die vordere Achse 66 in den vorderen Nutbacken ist in dem Ausführungsbeispiel der Fig. 6 derart ausgebildet, dass die Bohrung 91 den oberen Nutbacken vollständig durchgreift und in dem zweiten, unteren Nutbacken als ein Senkloch ausgebildet ist. Die drehbare Ausbildung der vorderen Lenkachse 64 ist zur Ausbildung der ersten Gruppierung vorgesehen. Zur Lenkung des Tretrollers 4 wird an der vorderen Lenkachse 64 an einer dritten vorderen Radelement-Verbindungsstelle 83vR die Lenkstange 5 angeordnet. Die Lenkstange 5 wirkt dafür mit ihrer ersten Lenkstangen-Verbindungsstelle 81L mit der dritten vorderen Radelement-Verbindungsstelle 83vR zusammen.

Für die Ausbildung der zweiten Gruppierung sind in Fig. 6 weiter eine Sperrachse 92 für die vordere Lenkachse 64 dargestellt, die zur Sperrung der Lenkachse 64 anstelle der Achse 66 in die Bohrungen 90 und 91 eingesetzt wird. Durch die Vorsprünge an der Sperrachse 92, welche in entsprechende Nuten in die Bohrungen 90 und 91 eingreifen, wird die Verdrehbarkeit des vorderen Verbindungsbereichs 63 des vorderen Radelements 6 und der vorderen Radaufhängung 65 gesperrt. Für die Ausbildung der zweiten Gruppierung ist weiter eine Abdeckung 10 vorgesehen, welche an der dritten vorderen Radelement-Verbindungsstelle 83vR am vorderen Radelement 6 angeordnet wird, um das Herausfallen der Sperrachse 92 der vorderen Lenkachse 64 zu verhindern.

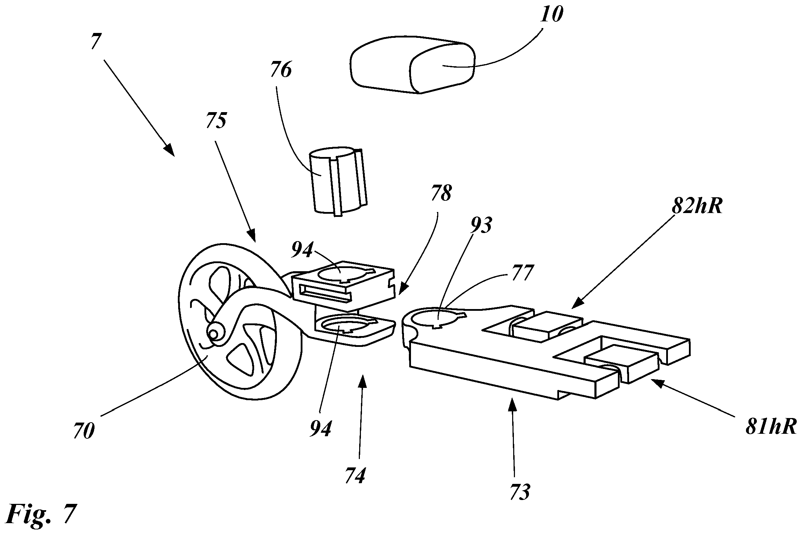

Fig. 7 zeigt die Baugruppe des hinteren Radelements 7 als Explosionsdarstellung, welche einen hinteren Verbindungsbereich 73 des hinteren Radelements 7, eine hintere Lenkachse 74 und eine hintere Radaufhängung 75 aufweist.

Der hintere Verbindungsbereich 73 des hinteren Radelements 7 weist in dem Ausführungsbeispiel der Fig. 7 die Verbindungsstellen 8 auf, d.h. eine erste hintere Radelement-Verbindungsstelle 81hR am hinteren Radelement 7, welche mit dem hinteren Verbindungsbereich 42 des Transportbretts 4 zur Ausbildung der ersten Gruppierung zusammenwirkt, und eine zweite hintere Radelement-Verbindungsstelle 82hR am hinteren Radelement 7 auf, welche mit dem hinteren Verbindungsbereich

42 des Transportbretts 4 zur Ausbildung der zweiten Gruppierung zusammenwirkt. Die beiden Verbindungsstellen 81hR und 82hR sind um 90° gedreht zueinander ausgebildet, um die Anordnung der Baugruppen in der ersten und zweiten Gruppierung zu ermöglichen.

Die hintere Lenkachse 74 setzt sich zusammen aus einer Sperrachse 76, einer hinteren Nut 78, welche an der hinteren Radaufhängung 75 ausgebildet ist, und einem hinteren Zapfen 77, welcher am hinteren Verbindungsbereich 73 des hinteren Radelements 7 ausgebildet ist. Die Sperrachse 76 verbindet den hinteren Verbindungsbereich 73 des hinteren Radelements 7 mit der hinteren Radaufhängung 75 starr miteinander, indem die Sperrachse 76 in einer Bohrung 94 für die hintere Sperrachse 76 in den hinteren Nutbacken und einer Bohrung 93 für die hintere Sperrachse 76 im hinteren Zapfen 77 angeordnet ist. Die Bohrung 94 für die hintere Sperrachse 76 in den hinteren Nutbacken ist in dem Ausführungsbeispiel der Fig. 7 derart ausgebildet, dass die Bohrung 94 den einen Nutbacken vollständig durchgreift und in den zweiten, unteren Nutbacken als ein Senkloch ausgebildet ist.

Für die Ausbildung der ersten und der zweiten Gruppierung weist in Fig. 7 die hintere Sperrachse 76 Vorsprünge auf, welche in entsprechende Nuten in die Bohrungen 93 und 94 eingreifen. Die hintere Sperrachse 76 ist in beiden Gruppierungen nicht drehbar ausgebildet. Die Abdeckung 10 wird, wie die Abdeckung in Fig. 6, an der hinteren Radaufhängung 75 angeordnet, um das Herausfallen der Sperrachse 76 der hinteren Lenkachse 74 zu verhindern.

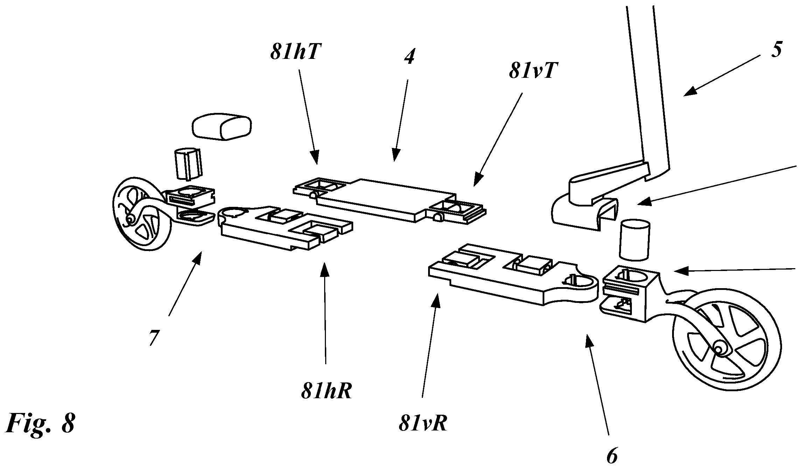

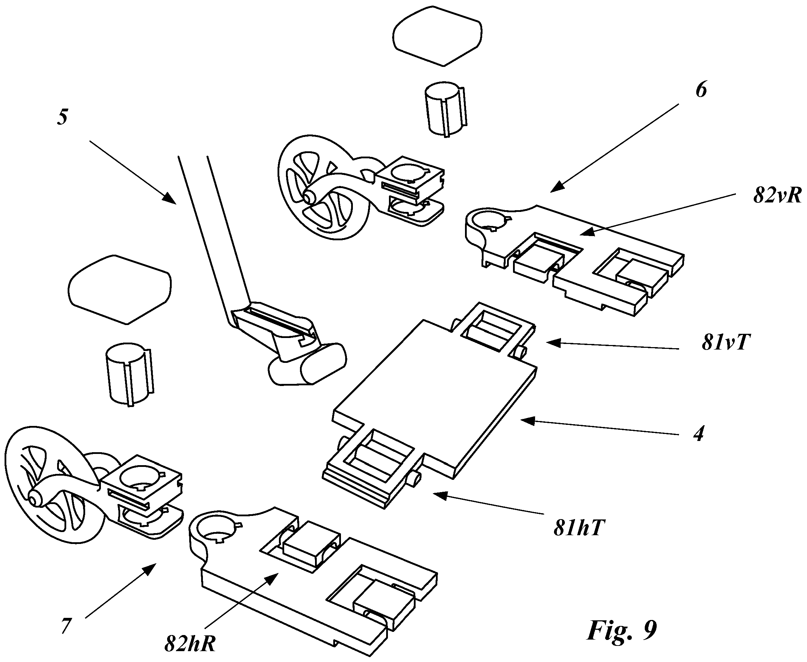

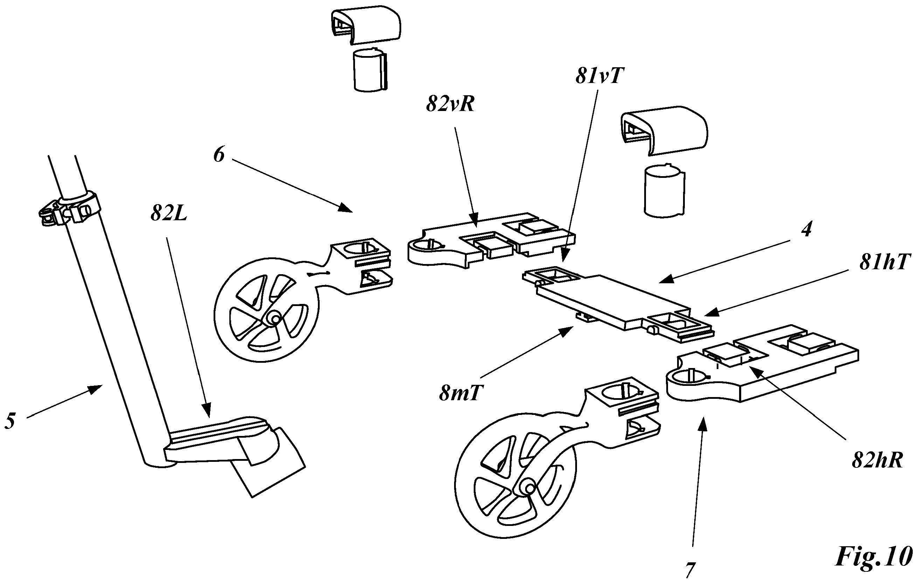

In Fig. 8 sind Teile der Baugruppen des Transportbretts 4, der Lenkstange 5, des vorderen Radelements 6 und des hinteren Radelements 7 als eine Explosionsdarstellung dargestellt; dies entspricht dem Tretroller 2 in Fig. 1. In den Fig. 9 und 10 sind die Baugruppen der Transportvorrichtung 1 als eine Explosionsdarstellung in der zweiten Gruppierung als Handkarren 3 in Vorderansicht und Rückansicht dargestellt; dies entspricht dem Handkarren 3 aus den Fig. 2 und 3.

In den Ausführungsbeispielen der Fig. 1, 2 und 3 und den Fig. 8, 9 und 10 weisen das vordere Radelement 6 und das hintere Radelement 7 jeweils zwei Verbindungsstellen 8, d.h. die erste vordere Radelement-Verbindungsstelle 81vR, die zweite vordere Radelement-Verbindungsstelle 82vR, die erste hintere Radelement-Verbindungsstelle 81hR und die zweite hintere Radelement-Verbindungsstelle 82hR auf, welche jeweils um 90° gedreht zueinander ausgebildet sind. In diesen Ausführungsbeispielen wirken diese Verbindungsstellen jeweils mit der ersten vorderen Transportbrett-Verbindungsstelle 81vT und der ersten hinteren Transportbrett-Verbindungsstelle 81hT derart zusammen, dass in der ersten Gruppierung in Fig. 1 und 8 die Baugruppen Transportbrett 4, vorderes Radelement 5 und hinteres Radelement 6 linear hintereinander angeordnet sind und in der zweiten Gruppierung in Fig. 2, 3, 9 und 10 die Baugruppen Transportbrett 4, vorderes Radelement 5 und hinteres Radelement 6 ein H bilden, wobei das Transportbrett 4 den Mittelbalken des H's ausbildet. Es sind auch Ausführungen möglich, bei denen jeweils die zwei um 90° gedrehten Verbindungsstellen am Transportbrett 4 ausgebildet sind, wie in Fig. 4 schematisch dargestellt.

In den Fig. 11a und 11b werden Ausführungsbeispiele der Verbindungsstellen 8 dargestellt, d.h. die erste vordere Transportbrett-Verbindungsstelle 81vT, die zweite vordere Transportbrett-Verbindungsstelle 82vT, die erste hintere Transportbrett-Verbindungsstelle 81hT, die zweite hintere Transportbrett-Verbindungsstelle 82hT, die erste vordere Radelement-Verbindungsstelle 81vR, die zweite vordere Radelement-Verbindungsstelle 82vR, die erste hintere Radelement-Verbindungsstelle 81hR und/oder die zweite hintere Radelement-Verbindungsstelle 82hR können wie in den Fig. 11a und/oder Fig. 11b dargestellt ausgebildet sein. Die voran aufgeführten Verbindungsstellen werden im Folgenden allgemein als Verbindungsstellen 8 bezeichnet.

Fig. 11b zeigt eine aufnehmende Verbindungsstelle 81 und Fig. 11a zeigt eine eingreifende Verbindungsstelle 80. Die Verbindungsstellen 8 in den vorangehenden Fig. 1 bis 10, d.h. die ersten und zweiten Verbindungsstellen aller Baugruppen, können als eingreifende Verbindungsstelle 80 oder aufnehmende Verbindungsstelle 81 ausgebildet sein, wobei jeweils eine eingreifende Verbindungsstelle 80 mit einer aufnehmende Verbindungsstelle 81 zur Befestigung von Baugruppen zusammenwirken.

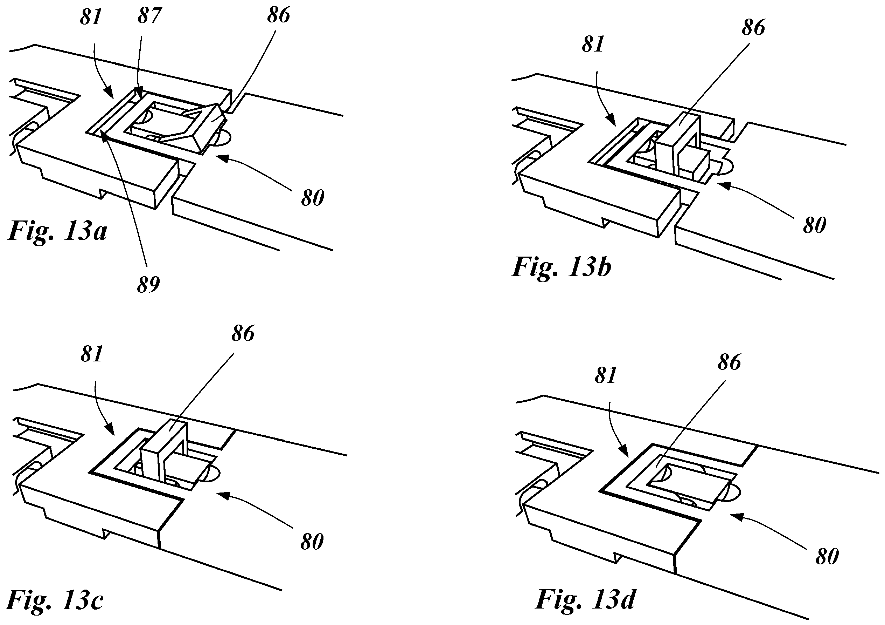

Die eingreifende Verbindungsstelle 80 ist im Ausführungsbeispiel der Figur 11a als ein rahmenförmiger Zapfen 82 ausgebildet, der sich in der Ebene des Transportbretts 4, des vorderen Radelements 5 und/oder des hinteren Radelements 6 erstreckt. Am vorderen Ende des rahmenförmigen Zapfens 82 ist eine Stufe 87 ausgebildet. Der rahmenförmige Zapfen 82 wird in dessen Ebene von einer Sprosse 83 durchgriffen, welche sich im Ausführungsbeispiel der Fig. 11a durch den rahmenförmigen Zapfen 82 hindurch erstreckt und als ein Rechteck mit abgerundeter Oberseite ausgebildet ist. Eine Sperrwippe 86 ist an der Sprosse 83 drehbar befestigt. Die Funktion der Sperrwippe 86 wird in den Fig. 13 beschrieben.

Die aufnehmende Verbindungsstelle 81 in Fig. 11b ist als ein Gegenstück zur eingreifenden Verbindungsstelle 80 der Fig. 11a ausgebildet. Die aufnehmende Verbindungsstelle 81 weist zur Aufnahme des rahmenförmige Zapfens 82 eine U-förmige Nut 84 mit einer überstehenden Nase 88 auf der Oberseite der Baugruppe auf und zur Aufnahme der Sprosse 83 eine Nut 85 an der Unterseite der Baugruppe. Die U-förmige Nut 84 weist einen Hinterschnitt 89 zur Aufnahme der Stufe 87 auf.

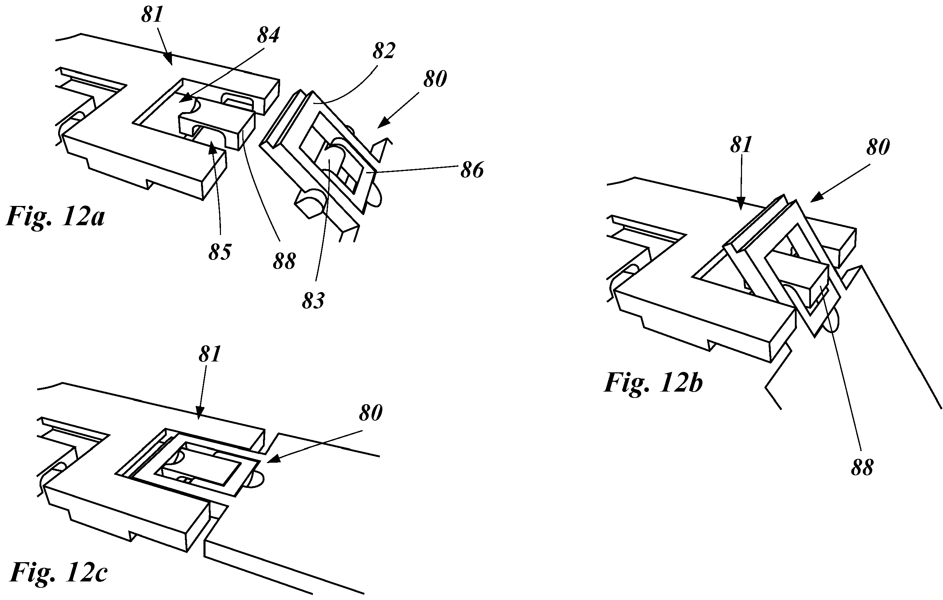

Die Fig. 12a bis 12c zeigen die Verbindung der eingreifenden Verbindungsstelle 80 und der aufnehmenden Verbindungsstelle 81. Dazu wird in einem ersten Schritt die Sprosse 83 von unten in die Nut 85 eingeführt, wobei dabei die Nase 88 in den rahmenförmigen Zapfen 82 eingreift. Anschließend werden die beiden Bauteile durch eine Kippbewegung auf dieselbe Ebene überführt, wodurch der rahmenförmige Zapfen 82 in die U-förmige Nut 84 eingreift.

Zur Sicherung der Verbindung wird, wie in den Fig. 13 dargestellt, die Sperrwippe 86 in eine Sperrstellung bewegt. In Fig. 13a sind die beiden Verbindungsstellen 80 und 81 miteinander verbunden, weisen aber noch einen Spalt auf, da die Stufe 87 noch nicht in den Hinterschnitt 89 eingreift. Zur Überführung in die Sperrstellung wird die Sperrwippe 86 nach oben aus der Ebene der Baugruppe herausgedreht (Fig. 13b). Dadurch können die beiden Baugruppen ineinander verschoben werden (Fig. 13c), wobei die Nase 88 einen Teil des Platzes der Sperrwippe 86 einnimmt und die Stufe 87 in den Hinterschnitt 89 eingreift. Anschließend wird die Sperrwippe 86 nach links wieder in die Ebene der beiden Baugruppen überführt, diese verhindert diesmal aber das Lösen der beiden Baugruppen, bzw. in einem ersten Schritt das Auseinanderziehen.

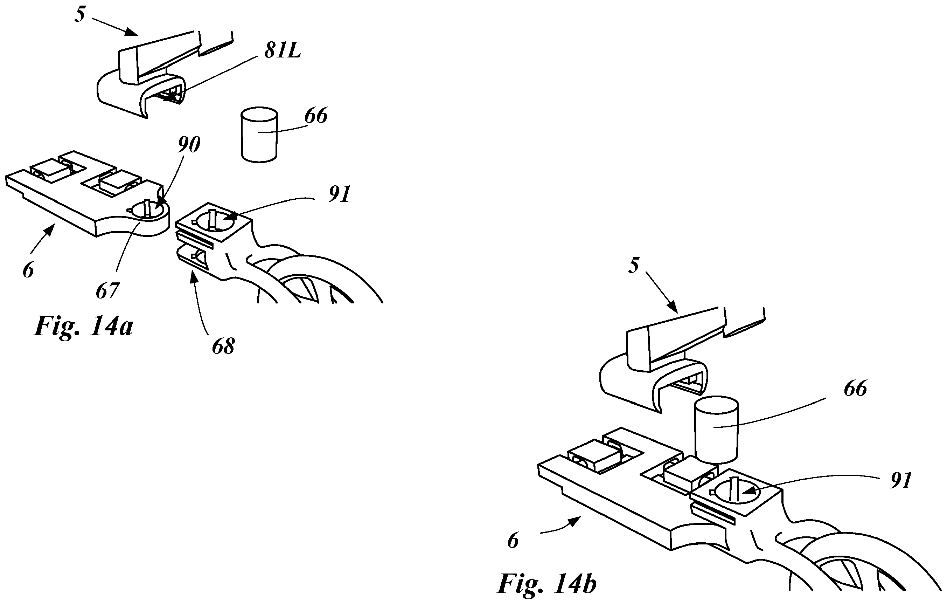

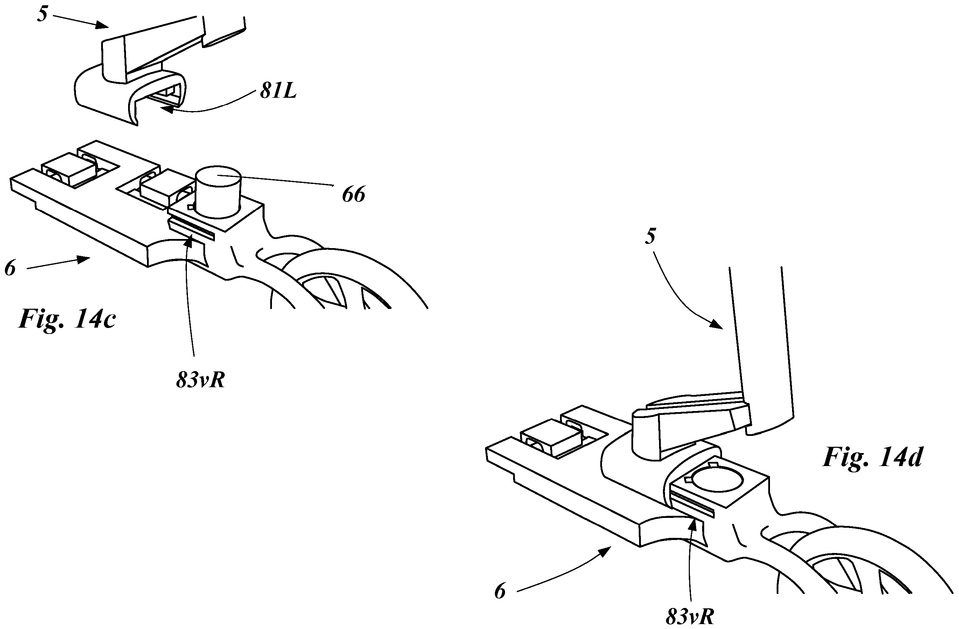

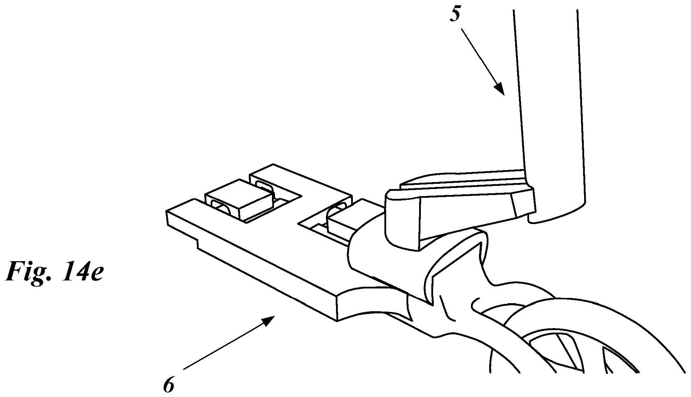

Die Fig. 14 zeigen den Zusammenbau des vorderen Radelements 6 aus den Bauteilen wie in Fig. 6 dargestellt für die erste Gruppierung zur Ausbildung des Tretrollers. Der vordere Zapfen 67 des vorderen Radelements 6 wird in die vordere Nut 68 der vorderen Radaufhängung 65 geschoben (Fig. 14b). Die vordere Achse 66 wird in die Bohrungen 90 und 91 im vorderen Zapfen 67 und den vorderen Nutbacken eingeführt (Fig. 14c und 14d). Die Lenkstange 5 wird mit der ersten Lenkstangen-Verbindungsstelle 81L anschließende an der dritten vorderen Radelement-Verbindungsstelle 83vR an der vorderen Radaufhängung 65 angeordnet. Dazu weist die dritte vordere Radelement-Verbindungsstelle 83vR an der vorderen Radaufhängung 65 zwei Nuten auf, in die Vorsprüngen an den Nutwänden der ersten Lenkstangen-Verbindungsstelle 81L an der Lenkstange 5 eingreifen (Fig. 14d und 14e). Die vordere Achse 66 ist durch die Lenkstange 5 gesichert.

Die Fig. 15 zeigen die Anordnung der Lenkstange 5 an dem Transportbrett 4 für die zweite Gruppierung zur Ausbildung des Handkarrens. Die zweite Lenkstangen-Verbindungsstelle 82L an der Lenkstange 5 weist eine T-förmige Nut auf und ist als Gegenstück zur mittleren Transportbrett-Verbindungsstelle 8mT am Transportbrett 4 ausgebildet. Die Lenkstange 5 wird zur Verbindung auf die mittlere Transportbrett-Verbindungsstelle 8mT geschoben und kann beispielsweise durch einen Sicherungsstift gesichert werden. Die Oberkante der zweiten Lenkstangen-Verbindungsstelle 82L an der Lenkstange 5 ist nicht im rechten Winkel zum Rohr 50 ausgebildet, sondern weist einen Winkel größer 90° auf. Dadurch ist die Lenkstange 5 in einem leichten Winkel nach vorne in Zugrichtung gebeugt an dem Transportbrett 4 angeordnet, welches zu einer verbesserten Zugeigenschaft des Handkarrens führt.

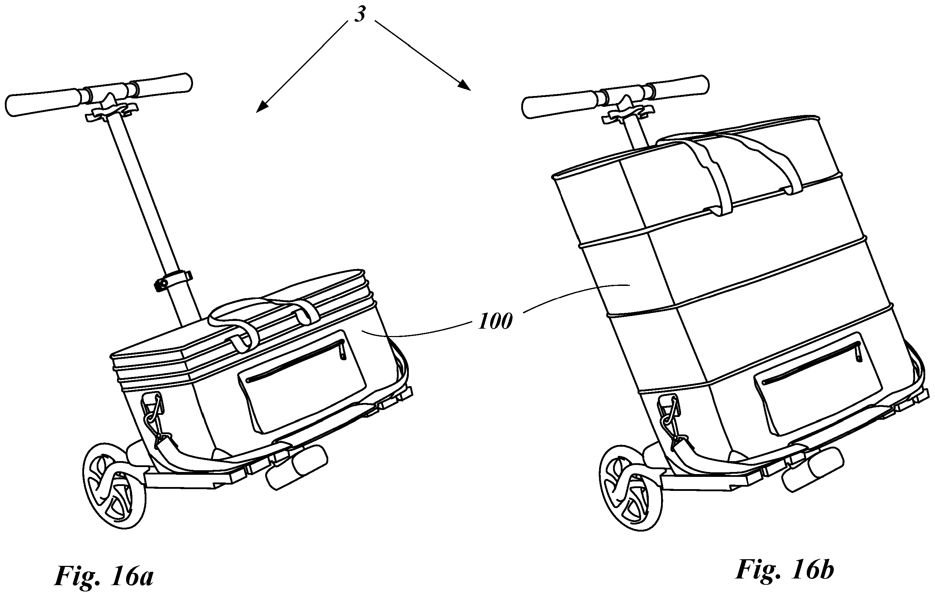

Die Fig. 16a und 16b zeigen die erfindungsgemäße Transportvorrichtung 1 in der zweiten Gruppierung als Handkarren 3 mit einem Transportsack 100. Der Transportsack 100 ist in diesen Ausführungsbeispiel auf der Auflagefläche des Transportbretts 4, des vorderen Radelements 6 und des hinteren Radelements 7 angeordnet und kann an der Lenkstange befestigt sein. Der Transportsack 100 ist in diesen Ausführungsbeispiel zusätzlich als Umhängetasche ausgebildet. Wie in den Fig. 16a und 16b gezeigt weist der Transportsack 100 feste ausziehbare Seitenwände auf, wodurch die Höhe des Transportsacks 100 variiert werden kann. Der Transportsack 100 kann auch mit faltbaren Ausziehelementen oder Dehnfalten ausgebildet sein um die Höhe zu variieren. Um den beim Gepäcktransport verursachten Lärm zu reduzieren kann der Transportsack 100 einen verstärkten und/oder lärmisolierenden Boden aufweisen, insbesondere aus einem dämpfenden Material bspw. einem Schaumstoff oder einem Gummi.

### Bezugszeichenliste

- 1: Transportvorrichtung
- 2: Tretroller
- 3: Handkarren
- 4: Transportbrett
- 5: Lenkstange
- 6: vorderes Radelement
- 7: hinteres Radelement
- 8: Verbindungsstelle
- 81vT: erste vordere Transportbrett-Verbindungsstelle
- 82vT: zweite vordere Transportbrett-Verbindungsstelle
- 8mT: mittlere Transportbrett-Verbindungsstelle
- 81hT: erste hintere Transportbrett-Verbindungsstelle
- 82hT: zweite hintere Transportbrett-Verbindungsstelle
- 81vR: erste vordere Radelement-Verbindungsstelle
- 82vR: zweite vordere Radelement-Verbindungsstelle
- 83vR: dritte vordere Radelement-Verbindungsstelle
- 81hR: erste hintere Radelement-Verbindungsstelle
- 82hR: zweite hintere Radelement-Verbindungsstelle
- 81L: erste Lenkstangen-Verbindungsstelle
- 82L: zweite Lenkstangen-Verbindungsstelle
- 9: Transporttasche
- 10: Abdeckung
- 40: Transportabschnitt
- 41: vorderer Verbindungsbereich
- 42: hinterer Verbindungsbereich
- 43: mittlerer Verbindungsbereich
- 50: Rohr
- 51: Griffstange
- 54: Verbindungsabschnitt an der Lenkstange
- 60: vorderes Rad
- 63: vorderer Verbindungsbereich
- 64: vordere Lenkachse
- 65: vordere Radaufhängung
- 66: vordere Achse
- 67: vorderer Zapfen
- 68: vordere Nut
- 70: hinteres Rad
- 73: hinterer Verbindungsbereich
- 74: hintere Lenkachse
- 75: hintere Radaufhängung
- 76: Sperrachse für die hintere Lenkachse
- 77: hinterer Zapfen
- 78: hintere Nut
- 80: eingreifende Verbindungsstelle
- 81: aufnehmende Verbindungsstelle
- 82: rahmenförmiger Zapfen
- 83: Sprosse
- 84: U-förmige Nut
- 85: Nut
- 86: Sperrwippe
- 87: Stufe
- 88: Nase
- 89: Hinterschnitt
- 90: Bohrung für die vordere Achse im vorderen Zapfen
- 91: Bohrung für die vordere Achse in den vorderen Nutbacken
- 92: Sperrachse für die vordere Lenkachse
- 93: Bohrung für die hintere Sperrachse im hinteren Zapfen
- 94: Bohrung für die hintere Sperrachse in den hinteren Nutbacken
- 100: Transportsack

## Patentansprüche

1. Transportvorrichtung (1) zum Transport von Personen und/oder Gepäck, wobei die Transportvorrichtung (1) ein Transportbrett (4), eine Lenkstange (5), ein vorderes Radelement (6) und ein hinteres Radelement (7) aufweist, und wobei das vordere Radelement (6) mindestens ein vorderes Rad (60) aufweist und das hintere Radelement (7) mindestens ein hinteres Rad (70) aufweist,
**dadurch gekennzeichnet,**
**dass** das Transportbrett (4), die Lenkstange (5), das vordere Radelement (6) und das hintere Radelement (7) jeweils als separate Baugruppen ausgebildet sind, und
**dass** das Transportbrett (4) und/oder die Lenkstange (5) und/oder das vordere Radelement (6) und/oder das hintere Radelement (7) eine oder mehrere Verbindungsstelle/n (8) zur Verbindung der Baugruppen untereinander aufweisen, und
**dass** die Transportvorrichtung (1) durch die separaten Baugruppen von einem Tretroller (2) zu einem Handkarren (3) umbaubar ist, indem die Verbindungsstellen (8) derart ausgebildet sind, dass
- in einer ersten Gruppierung die Baugruppen durch die Verbindungsstellen (8) zur Ausbildung des Tretrollers (2) angeordnet sind, und
- in einer zweiten Gruppierung die Baugruppen durch die Verbindungsstellen (8) zur Ausbildung des Handkarrens (2) angeordnet sind, und
**dass** in der ersten Gruppierung das vordere Radelement (6), das Transportbrett (4) und das hintere Radelement hintereinander (7), vorzugsweise in einer Linie oder einer Ebene hintereinander angeordnet sind, und dass in der zweiten Gruppierung das vordere Radelement (6) und das hintere Radelement (7) um 90° gedreht zur ersten Gruppierung am Transportbrett (4) angeordnet sind, vorzugsweise an derselben Seite des Transportbretts (4) angeordnet sind.

2. Transportvorrichtung (1) nach Anspruch 1,
**dadurch gekennzeichnet,**
**dass** am Transportbrett (4) in einem vorderen Bereich (41) eine oder zwei Verbindungsstellen (8) ausgebildet sind, vorzugsweise eine erste vordere Transportbrett-Verbindungsstelle (81vT) oder eine erste vordere Transportbrett-Verbindungsstelle (81vT) und eine zweite vordere Transportbrett-Verbindungsstelle (82vT), und/oder dass am Transportbrett (4) in einem hinteren Bereich (42) eine oder zwei Verbindungsstellen (8) ausgebildet sind, vorzugsweise eine erste hintere Transportbrett-Verbindungsstelle (81hT) oder eine erste hintere Transportbrett-Verbindungsstelle (81hT) und eine zweite hintere Transportbrett-Verbindungsstelle (82hT), und/oder dass am vorderen Radelement (6) eine oder zwei Verbindungsstellen (8) ausgebildet sind, vorzugsweise eine erste vordere Radelement-Verbindungsstelle (81vR) oder erste vordere Radelement-Verbindungsstelle (81vR) und eine zweite vordere Radelement-Verbindungsstelle (82vR), und/oder
**dass** am hinteren Radelement (7) eine oder zwei Verbindungsstellen (8) ausgebildet sind, vorzugsweise eine erste hintere Radelement-Verbindungsstelle (81hR) oder erste hintere Radelement-Verbindungsstelle (81hr) und eine zweite hintere Radelement-Verbindungsstelle (82hR).

3. Transportvorrichtung (1) nach einem der vorangehenden Ansprüche,
**dadurch gekennzeichnet,**
**dass** in der ersten Gruppierung zur Ausbildung des Tretrollers (2) das mindestens eine vordere Rad (60) und das mindestens eine hintere Rad (70) dieselbe Laufrichtung aufweisen und mit Abstand hintereinander angeordnet sind, vorzugsweise hintereinander in einer Linie oder einer Ebene angeordnet und durch das Transportbrett (4) beabstandet sind, und
**dass** in der zweiten Gruppierung zur Ausbildung des Handkarrens (3) das mindestens eine vordere Rad (60) und das mindestens eine hintere Rad (70) parallel zueinander angeordnet, vorzugsweise parallel in zwei getrennten Ebenen, und in ihrer Laufrichtung quer zu der Längsachse des Transportbretts (4) angeordnet sind.

4. Transportvorrichtung (1) nach einem der vorangehenden Ansprüche,
**dadurch gekennzeichnet,**
**dass** die Baugruppe des vorderen Radelements (6) einen vorderen Verbindungsbereich (63), eine vordere Lenkachse (64) und eine vordere Radaufhängung (65) mit dem vorderen Rad (60) aufweist.

5. Transportvorrichtung (1) nach einem Anspruch 4,
**dadurch gekennzeichnet,**
**dass** die vordere Lenkachse (64) durch eine Achse (66) und einen Zapfen (67) oder eine Nut am Verbindungsbereich (63) und einer Nut (68) oder einen Zapfen an der Radaufhängung (65) ausgebildet ist, wobei der Zapfen (67) und mindestens eine der Nutwangen der Nut (68) eine Öffnung (90, 91) für die Achse (66) aufweist, und
- **dass** in der ersten Gruppierung zur beweglichen Ausbildung der Lenkachse (64) die Achse (66) als Zylinder ausgebildet ist, welcher in die Öffnung (90, 91) eingreift, und
**dass** in der zweiten Gruppierung die Achse (66) als ein Zylinder mit einer oder mehreren Naben, oder einer oder mehrere Nuten oder einer Verzahnung oder eine Zahnkupplung ausgebildet ist, welche mit der Öffnung (90, 91) zur Sperrung der Lenkachse (64) zusammenwirkt, oder
- **dass** die Achse (66) als ein Zylinder mit einer oder mehreren Naben, oder einer oder mehrere Nuten oder einer Verzahnung oder eine Zahnkupplung ausgebildet ist und die Öffnung (90, 91) einen ersten Bereich zum Eingreifen der Nabe, oder einer Nut oder einer Verzahnung oder eine Zahnkupplung zum Sperren der beweglichen Ausbildung der Lenkachse (64), und
die Öffnung (90, 91) einen zweiten Bereich zum Eingreifen der einer oder mehreren Naben, oder einer oder mehrere Nuten oder einer Verzahnung oder eine Zahnkupplung zur Freigabe der beweglichen Ausbildung der Lenkachse (64) aufweist.

6. Transportvorrichtung (1) nach einem der vorangehenden Ansprüche,
**dadurch gekennzeichnet,**
**dass** die Baugruppe des hinteren Radelements (7) einen hinteren Verbindungsbereich (73) und eine hintere Radaufhängung (75) mit dem hinteren Rad (70) aufweist.

7. Transportvorrichtung (1) nach einem der vorangehenden Ansprüche,
**dadurch gekennzeichnet,**
**dass** die Baugruppe des Transportbretts (4) einen Transportabschnitt (40), und einen vorderen Verbindungsbereich (41) zum Zusammenwirken mit dem vorderen Radelement (6), und einen hinteren Verbindungsbereich (42) zum Zusammenwirken mit dem hinteren Radelement (70), und einen mittleren Verbindungsbereich (43) zum Zusammenwirken mit der Lenkstange (5) aufweist.

8. Transportvorrichtung (1) nach einem der vorangehenden Ansprüche,
**dadurch gekennzeichnet,**
**dass** die Baugruppe der Lenkstange (5) ein Rohr (50), vorzugsweise ein höhenverstellbares Teleskoprohr, eine Griffstange (51) und eine oder zwei Verbindungsstellen (8) aufweist, vorzugweise eine erste Lenkstangen-Verbindungsstelle (81L) oder eine erste Lenkstangen-Verbindungsstelle (81L) und eine zweite Lenkstangen-Verbindungsstelle (82L).

9. Transportvorrichtung (1) nach einem der vorangehenden Ansprüche,
**dadurch gekennzeichnet,**
**dass** die Verbindungsstelle (8), vorzugsweise
- die erste und/oder zweite vordere Transportbrett Verbindungsstelle (81vT, 82vT), und/oder
- die erste und/oder zweite hintere Transportbrett Verbindungsstelle (81hT, 82hT), und/oder
- die erste und/oder zweite vordere Radelement Verbindungsstelle (81vR, 82vR), und/oder
- die erste und/oder zweite hintere Radelement Verbindungsstelle (81hR, 82hR), und/oder
- die erste und/oder zweite Lenkstangen-Verbindungsstelle (81L, 82L) als eine eingreifende Verbindungsstelle (80) und/oder eine aufnehmende Verbindungsstelle (81) ausgebildet ist, vorzugsweise dass die eingreifende Verbindungstelle (80) als das Gegenstück zur aufnehmenden Verbindungsstelle (81) ausgebildet ist.

10. Transportvorrichtung (1) nach Anspruch 9,
**dadurch gekennzeichnet,**
**dass** die eingreifende Verbindungsstelle (80) einen rahmenförmigen Zapfen (82) mit einer Sprosse (83) aufweist, vorzugsweise die Sprosse (83) über den Rahmen hinaus ausgebildet ist, und
**dass** die aufnehmende Verbindungsstelle (81) eine erste U-förmige Nut (84) aufweist, vorzugsweise auf der Oberseite oder der Unterseite der Baugruppe, in die der rahmenförmige Zapfen (82) eingreifen kann, und eine zweite Nut (85) aufweist, vorzugsweise auf der Unterseite oder der Oberseite der Baugruppe, in die die Sprosse (83) eingreifen kann, oder
**dass** die engreifende Verbindungsstelle (80) einen oder mehrere Zapfen oder Schwalbenschwanzzapfen aufweisen ist, und
**dass** die aufnehmende Verbindungsstelle (81) eine oder mehrere Nuten oder Schwalbenschwanznuten aufweisen, in die die Zapfen oder Schwalbenschwanzzapfen eingreifen.

11. Transportvorrichtung (1) nach einem der vorangehenden Ansprüche,
**dadurch gekennzeichnet,**
**dass** auf dem Transportbrett (4) und/oder dem vordere Radelement (6) und/oder dem hinteren Radelement (7) eine lärmisolierende oder geräuschdämpfende Abdeckung und/oder eine lärmisolierende oder geräuschdämpfende Schicht angeordnet ist.

12. Transportvorrichtung (1) nach einem der vorangehenden Ansprüche,
**dadurch gekennzeichnet,**
**dass** die Transportvorrichtung (1) eine tragbare Transporttasche oder einen tragbaren Transportrucksack oder einen tragbaren Transportsack umfasst, vorzugsweise dass zum Transport der Transportvorrichtung die Baugruppen der Transportvorrichtung in der Transporttasche oder dem Transportrucksack oder dem Transportsack verstaubar, insbesondere angeordnet und/oder anordenbar sind.

13. Verfahren zum Umbau einer Transportvorrichtung (1) zum Transport von Personen und/oder Gepäck von einem Tretroller (2) zu einer Handkarre (3) oder umgekehrt,
wobei die Transportvorrichtung (1) eine Transportbrett-Baugruppe, eine Lenkstangen-Baugruppe, eine vordere Radelement-Baugruppe mit mindestens einem vorderen Rad (60) und eine hintere Radelement-Baugruppe mit mindestens einem hinteren Rad (70) aufweist, und wobei die Baugruppen in einer ersten Gruppierung die Baugruppen zur Ausbildung des Tretrollers (2) angeordnet sind, indem das mindestens eine vordere Rad (60) und das mindestens eine hintere Rad (70) hintereinander angeordnet sind, vorzugsweise hintereinander in einer Linie, und in einer zweiten Gruppierung die Baugruppen zur Ausbildung des Handkarrens (3) angeordnet sind, indem das mindestens eine vordere Rad (60) und das mindestens eine hintere Rad (70) parallel zueinander angeordnet sind, **dadurch gekennzeichnet,**
**dass** der Umbau von der einen Gruppierung zur anderen Gruppierung folgende Schritte umfasst:
- Lösen des vorderen und hinteren Radelements (6, 7) vom Transportbrett (4),
- Verbinden des hinteren und vorderen Radelements (6, 7) an ersten Verbindungsstellen (8) des Transportbretts (4) zur Ausbildung des Tretrollers (2), oder an zweiten Verbindungsstellen (8) des Transportbretts (4) zur Ausbildung des Handkarrens (3),
wobei die ersten und/oder zweiten Verbindungsstellen (8) am Transportbrett (4) und/oder am vorderen Radelement (6) und/oder am hinteren Radelement (7) ausgebildet sind.

14. Verfahren zum Umbau einer Transportvorrichtung (1) nach Anspruch 13,
**dadurch gekennzeichnet,**
wobei der Umbau von der ersten Gruppierung zur zweiten Gruppierung weiter folgenden Schritt umfasst:
- Lösen der Lenkstange (5) vom vorderen Radelement (6), vorzugsweise von einer dritten vorderen Radelement-Verbindungsstelle (83vR) am vorderen Radelement (6), und
- Verbinden der Lenkstange (5) am Transportbrett (4), vorzugsweise an einer mittleren Transportbrett-Verbindungsstelle (8mT), vorzugsweise um 90° gedreht, höchst vorzugsweise um 90° gedreht in Zugrichtung, und
- Sperren der Lenkbarkeit des vorderen Radelements (6).

## Claims

1. Transportation device (1) for transporting people and/or luggage,
wherein the transportation device (1) comprises a transportation board (4), a steering bar (5), a front wheel element (6) and a rear wheel element (7), and wherein the front wheel element (6) has at least one front wheel (60) and the rear wheel element (7) has at least one rear wheel (70),
**characterized in that,**
the transportation board (4), the steering bar (5), the front wheel element (6) and the rear wheel element (7) are each designed as separate assembly groups, and
the transportation board (4) and/or the steering bar (5) and/or the front wheel element (6) and/or the rear wheel element (7) have one or more connecting point(s) (8) for connecting the assembly groups to one another, and
the transportation device (1) is convertible from a scooter (2) to a handcart (3) by the separate assembly groups, wherein the connecting points (8) are designed in such a way that
- in a first grouping, the assembly groups are arranged by the connecting points (8) to form the scooter (2), and
- in a second grouping, the assembly groups are arranged by the connecting points (8) to form the handcart (2), and
that in the first grouping the front wheel element (6), the transportation board (4) and the rear wheel element are arranged one after the other (7), preferably in a line or a plane one after the other, and in the second grouping the front wheel element (6) and the rear wheel element (7) are arranged on the transportation board (4) rotated by 90° relative to the first grouping, preferably arranged on the same side of the transportation board (4).

2. Transportation device (1) according to claim 1,
**characterized in that,**
one or two connecting points (8) are formed on the transportation board (4) in a front region (41), preferably a first front transportation board connecting point (81vT) or a first front transportation board connecting point (81vT) and a second front transportation board connecting point (82vT), and/or one or two connecting points (8) are formed on the transportation board (4) in a rear region (42), preferably a first rear transportation board connecting point (81hT) or a first rear transportation board connecting point (81hT) and a second rear transportation board connecting point (82hT), and/or one or two connecting points (8) are formed on the front wheel element (6), preferably a first front wheel element connecting point (81vR) or a first front wheel element connecting point (81vR) and a second front wheel element connecting point (82vR), and/or
one or two connecting points (8) are formed on the rear wheel element (7), preferably a first rear wheel element connecting point (81hR) or a first rear wheel element connecting point (81hr) and a second rear wheel element connecting point (82hR).

3. Transportation device (1) according to one of the preceding claims,
**characterized in that,**
in the first grouping for forming the scooter (2), the at least one front wheel (60) and the at least one rear wheel (70) have the same running direction and are arranged at a distance one after the other, preferably arranged one after the other in a line or a plane and spaced apart by the transportation board (4), and
in the second grouping for forming the handcart (3), the at least one front wheel (60) and the at least one rear wheel (70) are arranged parallel to one another, preferably parallel in two separate planes, and are arranged in their running direction transversely to the longitudinal axis of the transportation board (4).

4. Transportation device (1) according to one of the preceding claims,
**characterized in that,**
the assembly group of the front wheel element (6) has a front connecting region (63), a front steering axle (64) and a front wheel suspension (65) with the front wheel (60).

5. Transportation device (1) according to claim 4,
**characterized in that,**
the front steering axle (64) is formed by an axle (66) and a pin (67) or a groove on the connecting region (63) and a groove (68) or a pin on the wheel suspension (65), the pin (67) and at least one of the groove cheeks of the groove (68) having an opening (90, 91) for the axle (66), and
- in the first grouping for the movable formation of the steering axle (64), the axle (66) is formed as a cylinder which engages in the opening (90, 91), and
in the second grouping the axle (66) is designed as a cylinder with one or more hubs, or one or more grooves or a toothing or a toothed coupling, which interacts with the opening (90, 91) for locking the steering axle (64), or
- the axle (66) is formed as a cylinder with one or more hubs, or one or more grooves or a toothing or a toothed coupling, and the opening (90, 91) has a first region for engaging the hub, or a groove or a toothing or a toothed coupling for locking the movable formation of the steering axle (64), and the opening (90, 91) has a second region for engagement of one or more hubs, or one or more grooves or a toothing or a toothed coupling for releasing the movable formation of the steering axle (64).

6. Transportation device (1) according to one of the preceding claims,
**characterized in that,**
the assembly group of the rear wheel element (7) has a rear connecting area (73) and a rear wheel suspension (75) with the rear wheel (70).

7. Transportation device (1) according to one of the preceding claims,
**characterized in that,**
the assembly group of the transportation board (4) has a transport section (40), and a front connecting region (41) for interacting with the front wheel element (6), and a rear connecting region (42) for interacting with the rear wheel element (70), and a central connecting region (43) for interacting with the steering bar (5).

8. Transportation device (1) according to one of the preceding claims,
**characterized in that,**
the assembly group of the steering bar (5) has a tube (50), preferably a height-adjustable telescopic tube, a handlebar (51) and one or two connecting points (8), preferably a first steering bar connecting point (81L) or a first steering bar connecting point (81L) and a second steering bar connecting point (82L).

9. Transportation device (1) according to one of the preceding claims,
**characterized in that,**
the connecting point (8), preferably
- the first and/or second front transportation board connecting point (81vT, 82vT), and/or
- the first and/or second rear transportation board connecting point (81hT, 82hT), and/or
- the first and/or second front wheel element connecting point (81vR, 82vR), and/or
- the first and/or second rear wheel element connecting point (81hR, 82hR), and/or
- the first and/or second steering bar connecting point (81L, 82L) is designed as an engaging connecting point (80) and/or a receiving connecting point (81), preferably that the engaging connecting point (80) is designed as the counterpart to the receiving connecting point (81).

10. Transportation device (1) according to claim 9,
**characterized in that,**
the engaging connecting point (80) has a frame-shaped pin (82) with a rung (83), preferably the rung (83) is formed beyond the frame, and
the receiving connecting point (81) has a first U-shaped groove (84), preferably on the upper side or the underside of the assembly group, into which the frame-shaped pin (82) can engage, and a second groove (85), preferably on the underside or the upper side of the assembly group, into which the rung (83) can engage, or
the engaging connecting point (80) is provided with one or more pins or dovetail pins, and
the receiving connecting point (81) has one or more grooves or dovetail grooves in which the pins or dovetail pins engage.

11. Transportation device (1) according to one of the preceding claims,
**characterized in that,**
a noise-insulating or noise-damping cover and/or a noise-insulating or noise-damping layer is arranged on the transportation board (4) and/or the front wheel element (6) and/or the rear wheel element (7).

12. Transportation device (1) according to one of the preceding claims,
**characterized in that,**
the transportation device (1) comprises a portable transport bag or a portable transport backpack or a portable transport sack, preferably that the assembly groups of the transportation device are stowable, in particular arranged and/or arrangeable, in the transport bag or the transport backpack or the transport sack for transporting the transportation device.

13. Method for converting a transportation device (1) for transporting persons and/or luggage from a scooter (2) to a handcart (3) or vice versa, wherein the transportation device (1) comprises a transportation board assembly group, a steering bar assembly group, a front wheel element assembly group with at least one front wheel (60) and a rear wheel element assembly group with at least one rear wheel (70), and
wherein the assembly groups are arranged in a first grouping to form the scooter (2), in which the at least one front wheel (60) and the at least one rear wheel (70) are arranged one after the other, preferably one after the other in a line, and in a second grouping the assembly groups are arranged to form the handcart (3), in which the at least one front wheel (60) and the at least one rear wheel (70) are arranged parallel to one another,
**characterized in that**
the conversion from one grouping to the other grouping comprises the following steps:
- Releasing the front and rear wheel elements (6, 7) from the transportation board (4),
- Connecting the rear and front wheel element (6, 7) to first connecting points (8) of the transportation board (4) to form the scooter (2), or to second connecting points (8) of the transportation board (4) to form the handcart (3),
wherein the first and/or second connecting points (8) are formed on the transportation board (4) and/or on the front wheel element (6) and/or on the rear wheel element (7).

14. Method for converting a transportation device (1) according to claim 13,
**characterized in that**
wherein the conversion from the first grouping to the second grouping further comprises the following step:
- releasing the steering bar (5) from the front wheel element (6), preferably from a third front wheel element connecting point (83vR) on the front wheel element (6), and
- connecting the steering bar (5) to the transportation board (4), preferably at a central transportation board connecting point (8mT), preferably rotated by 90°, most preferably rotated by 90° in the pulling direction, and
- locking the steerability of the front wheel element (6).

## Revendications

1. Dispositif de transport (1) pour le transport de personnes et/ou de bagages, dans lequel le dispositif de transport (1) comprend une planche de transport (4), un guidon (5), un élément de roue avant (6) et un élément de roue arrière (7), et
dans lequel l'élément de roue avant (6) présente au moins une roue avant (60) et l'élément de roue arrière (7) présente au moins une roue arrière (70), **caractérisé en ce que**
la planche de transport (4), le guidon (5), l'élément de roue avant (6) et l'élément de roue arrière (7) sont respectivement réalisés sous forme de sous-ensembles séparés, et
la planche de transport (4) et/ou le guidon (5) et/ou l'élément de roue avant (6) et/ou l'élément de roue arrière (7) présentent un ou plusieurs point(s) de liaison (8) pour relier les sous-ensembles entre eux, et
le dispositif de transport (1) peut être transformé par les sous-ensembles séparés d'une trottinette (2) en un chariot à main (3), **en ce que** les points de liaison (8) sont réalisés de telle sorte que
- dans un premier groupement, les sous-ensembles sont disposés par les points de liaison (8) pour former la trottinette (2), et
- dans un deuxième groupement, les sous-ensembles sont disposés par les points de liaison (8) pour former le chariot à main (2), et
dans le premier groupement, l'élément de roue avant (6), la planche de transport (4) et l'élément de roue arrière sont disposés l'un derrière l'autre (7), de préférence sur une ligne ou un plan l'un derrière l'autre, et **en ce que**, dans le deuxième groupement, l'élément de roue avant (6) et l'élément de roue arrière (7) sont disposés sur la planche de transport (4) en étant tournés de 90° par rapport au premier groupement, de préférence sur le même côté de la planche de transport (4).

2. Dispositif de transport selon la revendication 1,
**caractérisé en ce que**
un ou deux points de liaison (8) sont formés sur la planche de transport (4) dans une zone avant (41), de préférence un premier point de liaison de planche de transport avant (81vT) ou un premier point de liaison de planche de transport avant (81vT) et un deuxième point de liaison de planche de transport avant (82vT), et/ou
un ou deux points de liaison (8) sont formés sur la planche de transport (4) dans une zone arrière (42), de préférence un premier point de liaison arrière de la planche de transport (81hT) ou un premier point de liaison arrière de la planche de transport (81hT) et un deuxième point de liaison arrière de la planche de transport (82hT), et/ou
un ou deux points de liaison (8) sont formés sur l'élément de roue avant (6) , de préférence un premier point de liaison d'élément de roue avant (81vR) ou un premier point de liaison d'élément de roue avant (81vR) et un deuxième point de liaison d'élément de roue avant (82vR), et/ou un ou deux points de liaison (8) sont formés sur l'élément de roue arrière (7), de préférence un premier point de liaison d'élément de roue arrière (81hR) ou un premier point de liaison d'élément de roue arrière (81hr) et un deuxième point de liaison d'élément de roue arrière (82hR).

3. Dispositif de transport (1) selon l'une des revendications précédentes,
**caractérisé en ce que**
dans le premier groupement pour la formation de la trottinette (2), la au moins une roue avant (60) et la au moins une roue arrière (70) présentent le même sens de roulement et sont disposées à distance l'une derrière l'autre, de préférence disposées l'une derrière l'autre sur une ligne ou un plan et sont espacées par la planche de transport (4), et
dans le deuxième groupement pour former le chariot à main (3), la au moins une roue avant (60) et la au moins une roue arrière (70) sont disposées parallèlement l'une à l'autre, de préférence parallèlement dans deux plans séparés, et sont disposées dans leur direction de roulement transversalement à l'axe longitudinal de la planche de transport (4).

4. Dispositif de transport (1) selon l'une des revendications précédentes,
**caractérisé en ce que**
l'ensemble de l'élément de roue avant (6) comprend une zone de liaison avant (63), un essieu directeur avant (64) et une suspension de roue avant (65) avec la roue avant (60).

5. Dispositif de transport selon la revendication 4,
**caractérisé en ce que**
l'essieu directeur avant (64) est formé par un axe (66) et un tourillon (67) ou une rainure sur la zone de liaison (63) et une rainure (68) ou un tourillon sur la suspension de roue (65), le tourillon (67) et au moins l'une des joues de la rainure (68) présentant une ouverture (90, 91) pour l'axe (66), et
- dans le premier groupement pour la réalisation mobile de l'essieu directeur (64), l'axe (66) est réalisé sous forme de cylindre qui s'engage dans l'ouverture (90, 91), et
dans le deuxième groupement, l'axe (66) est réalisé sous la forme d'un cylindre avec un ou plusieurs moyeux, ou une ou plusieurs rainures ou une denture ou un accouplement à dents, qui coopère avec l'ouverture (90, 91) pour bloquer l'essieu directeur (64), ou
- l'axe (66) est réalisé sous la forme d'un cylindre avec un ou plusieurs moyeux, ou une ou plusieurs rainures ou une denture ou un accouplement à dents, et l'ouverture (90, 91) comporte une première zone pour l'engagement du moyeu, ou d'une rainure ou d'une denture ou d'un accouplement à dents pour bloquer la configuration mobile de l'axe de direction (64), et
l'ouverture (90, 91) présente une deuxième zone pour l'engagement d'un ou de plusieurs moyeux, ou d'une ou de plusieurs rainures ou d'une denture ou d'un accouplement à dents pour libérer la configuration mobile de l'essieu directeur (64).

6. Dispositif de transport (1) selon l'une des revendications précédentes,
**caractérisé en ce que**
l'ensemble de l'élément de roue arrière (7) comprend une zone de liaison arrière (73) et une suspension de roue arrière (75) avec la roue arrière (70).

7. Dispositif de transport (1) selon l'une des revendications précédentes,
**caractérisé en ce que**
l'ensemble de la planche de transport (4) comprend une section de transport (40), et une zone de liaison avant (41) pour coopérer avec l'élément de roue avant (6), et une zone de liaison arrière (42) pour coopérer avec l'élément de roue arrière (70), et une zone de liaison intermédiaire (43) pour coopérer avec le guidon (5).

8. Dispositif de transport (1) selon l'une des revendications précédentes,
**caractérisé en ce que**
l'ensemble du guidon (5) présente un tube (50), de préférence un tube télescopique réglable en hauteur, une poignée (51) et un ou deux points de liaison (8), de préférence un premier point de liaison de guidon (81L) ou un premier point de liaison de guidon (81L) et un deuxième point de liaison de guidon (82L).

9. Dispositif de transport (1) selon l'une des revendications précédentes,
**caractérisé en ce que**
le point de liaison (8), de préférence
- la première et/ou la deuxième point de liaison de planche de transport avant (81vT, 82vT), et/ou
- la première et/ou la deuxième point de liaison de planche de transport arrière (81hT, 82hT), et/ou
- la première et/ou la deuxième point de liaison d'élément de roue avant (81vR, 82vR), et/ou
- la première et/ou la deuxième point de liaison d'élément de roue arrière (81hR, 82hR), et/ou
- le premier et/ou le deuxième point de liaison de guidon (81L, 82L) est réalisé sous la forme d'un point de liaison d'engagement (80) et/ou d'un point de liaison de réception (81), de préférence **en ce que** le point de liaison d'engagement (80) est réalisé sous la forme de la contrepartie du point de liaison de réception (81).

10. Dispositif de transport selon la revendication 9,
**caractérisé en ce que**
le point de liaison (80) d'engagement présente un tenon (82) en forme de cadre avec un échelon (83), de préférence l'échelon (83) est réalisé au-delà du cadre, et
le point de liaison (81) de réception présente une première rainure (84) en forme de U, de préférence sur la face supérieure ou la face inférieure de l'ensemble, dans laquelle le tenon (82) en forme de cadre peut s'engager, et une deuxième rainure (85), de préférence sur la face inférieure ou la face supérieure de l'ensemble, dans laquelle le l'échelon (83) peut s'engager, ou le point de liaison (80) d'engagement présente un ou plusieurs tenons ou tenons en queue d'aronde, et
le point de liaison (81) de réception présente une ou plusieurs rainures ou rainures en queue d'aronde dans lesquelles s'engagent les tenons ou tenons en queue d'aronde.

11. Dispositif de transport (1) selon l'une des revendications précédentes,
**caractérisé en ce que**
sur la planche de transport (4) et/ou l'élément de roue avant (6) et/ou l'élément de roue arrière (7) est disposé un recouvrement isolant du bruit ou amortissant le bruit et/ou une couche isolante du bruit ou amortissant le bruit.

12. Dispositif de transport (1) selon l'une des revendications précédentes,
**caractérisé en ce que**
le dispositif de transport (1) comprend un sac de transport portable ou un sac à dos de transport portable ou un sachet de transport portable, de préférence en ce que, pour le transport du dispositif de transport, les modules du dispositif de transport peuvent être rangés, notamment disposés et/ou agencés dans le sac de transport ou le sac à dos de transport ou le sachet de transport.

13. Procédé de transformation d'un dispositif de transport (1) pour le transport de personnes et/ou de bagages d'une trottinette (2) à un chariot à main (3) ou inversement,
dans lequel le dispositif de transport (1) comprend un ensemble de planche de transport, un ensemble de guidon, un ensemble d'élément de roue avant comprenant au moins une roue avant (60) et un ensemble d'élément de roue arrière comprenant au moins une roue arrière (70), et
les ensembles étant disposés dans un premier groupement les ensembles pour former la trottinette (2), en ce que la au moins une roue avant (60) et la au moins une roue arrière (70) sont disposées l'une derrière l'autre, de préférence l'une derrière l'autre en ligne, et dans un deuxième groupement les ensembles pour former le chariot à main (3) étant disposés en ce que la au moins une roue avant (60) et la au moins une roue arrière (70) sont disposées parallèlement l'une à l'autre,
**caractérisé en ce que**
la transformation d'un groupement à l'autre comprend les étapes suivantes :
- détachement de l'éléments de roue avant et arrière (6, 7) de la planche de transport (4),
- relier les éléments de roue arrière et avant (6, 7) en des premiers points de liaison (8) de la planche de transport (4) pour former la trottinette (2), ou en des deuxièmes points de liaison (8) de la planche de transport (4) pour former le chariot à main (3),
les premiers et/ou deuxièmes points de liaison (8) étant réalisés sur la planche de transport (4) et/ou sur l'élément de roue avant (6) et/ou sur l'élément de roue arrière (7).

14. Procédé de transformation d'un dispositif de transport (1) selon la revendication 13,
**caractérisé en ce que**
dans lequel la transformation du premier groupement au deuxième groupement comprend en outre l'étape suivante:
- le détachement du guidon (5) de l'élément de roue avant (6), de préférence d'un troisième point de liaison d'élément de roue avant (83vR) sur l'élément de roue avant (6), et
- relier le guidon (5) à la planche de transport (4), de préférence à un point de liaison central de la planche de transport (8mT), de préférence tourné de 90°, de très préférence tourné de 90° dans la direction de traction, et
- Blocage de la direction de l'élément de roue avant (6).
